# EUROPÄISCHE PATENTSCHRIFT

(11) **EP 4 185 548 B1**
(45) Veröffentlichungstag und Bekanntmachung des Hinweises auf die Patenterteilung: **02.07.2025**
(21) Anmeldenummer: 21703346.3
(22) Anmeldetag: 04.02.2021
(51) Int. Cl.: B65G 47/90, B65B 21/12, B25J 15/00, B25J 15/02, B25J 15/10, B25J 15/12, B65B 5/08, B65B 17/02, B65B 21/06, B65B 21/18, B65B 21/20, B65B 21/24, B65B 27/04, B65B 35/16, B65B 35/36

(54) **GREIFER FÜR GETRÄNKEDOSEN, GREIFERKOPF UND VERFAHREN ZUM ENTGEGENNEHMEN WENIGSTENS EINER GETRÄNKEDOSE**
GRIPPER FOR BEVERAGE CANS, GRIPPER HEAD, AND METHOD FOR RECEIVING AT LEAST ONE BEVERAGE CAN
PRÉHENSEUR POUR CANETTES DE BOISSON, TÊTE DE PRÉHENSEUR ET PROCÉDÉ DE RÉCEPTION D'AU MOINS UNE CANETTE DE BOISSON

(30) Priorität: 21.07.2020 DE 102020119228
(43) Veröffentlichungstag der Anmeldung: 31.05.2023
(73) Patentinhaber: Krones Aktiengesellschaft, 93073 Neutraubling (DE)
(72) Erfinder: SPINDLER, Herbert, 93073 Neutraubling (DE); STADLER, Thomas, 93073 Neutraubling (DE); WITTMANN, Stephan, 93073 Neutraubling (DE)
(74) Vertreter: Benninger, Johannes
(86) Internationale Anmeldenummer: PCT/EP2021/052723
(87) Internationale Veröffentlichungsnummer: WO 2022/017650

(56) Entgegenhaltungen:
- EP-A1- 0 513 079
- EP-B1- 0 513 079
- WO-A1-2019/009655
- WO-A1-2020/142158
- CN-A- 107 720 258
- DE-A1- 102011 050 772
- DE-A1- 102011 051 926
- DE-U1- 202015 101 356
- FR-E- 67 084
- JP-A- 2005 044 041
- US-A- 3 690 715
- US-A- 3 970 201

## Beschreibung

Die vorliegende Erfindung betrifft einen Greifkopf für Getränkedosen und ein Verfahren zum Entgegennehmen wenigstens einer Getränkedose.

Getränkedosen stellen neben Flaschen und Getränkekartons eine der wichtigsten Handelsverpackungen für Getränke dar. Sie können darüber hinaus zugleich als Trinkgefäß dienen. Getränkedosen werden vor allem für kohlensäurehaltige Getränke wie Dosenbier und Softdrinks wie bspw. Cola-Getränke, Limonaden aller Art und Energy-Drinks verwendet. Das Öffnen von Getränkedosen zum Zwecke des Verzehrs erfolgt typischerweise mittels deckelseitig angeordneter Aufreißlaschen.

Aktuell eingesetzte Getränkedosen bestehen u.a. meist aus einem einteiligen, zylindrisch geformten Behälter aus Aluminium oder Weißblech und einem aufgefalzten Deckel aus Aluminium mit einer ovalen Ritzlinie und einer angenieteten Metalllasche, die als "eingebauter Dosenöffner" beim Anheben das angeritzte Oval durch Hebelwirkung ins Doseninnere drückt und so eine Ausgieß- bzw. Trinköffnung bildet. In einem unterhalb des Deckels befindlichen Mantelbereich weisen die Dosen normalerweise eine Verjüngung ihres Durchmessers auf und bilden hierdurch einen Falz im oberen Randbereich. Somit weist auch der Deckel normalerweise einen geringeren Außendurchmesser auf als der zylindrische Mantelbereich der Dose.

Für die Verarbeitung, Zusammenstellung, Gruppierung und Verpackung von Artikeln wie bspw. Getränkebehältern in Form von Dosen gibt es unterschiedliche Verpackungsarten, bspw. die Zusammenfassung der Artikel bzw. Behälter zu tragbaren, relativ handlichen Gebindeeinheiten, die allgemein auch als Verpackungseinheiten betrachtet werden können. Auch hier sind verschiedene Möglichkeiten bekannt, einzelne Dosen zu größeren Gebinden zusammenzufassen. So werden bspw. Getränkebehälter meist mittels Schrumpffolien zu Gebinden von vier, sechs oder mehr Behältern zusammengefasst und verpackt. Die Herstellung von Gebinden ist meist unumgänglich, da sie die häufigste Variante von Verkaufseinheiten oder Verpackungseinheiten für Getränkebehälter, insbesondere Dosen aus Metall oder Kunststoff oder Flaschen aus PET-Kunststoff, darstellen. Die Gebinde werden für den Transport teilweise nochmals zusammengefasst und/oder in Lagen zusammengestellt und palettiert.

Weiterhin ist die Verwendung von sogenannten oberen Greifkartonverpackungen bekannt, um beispielsweise mehrere Getränkebehälter, insbesondere Flaschen oder Dosen, über ihre Halsbereiche zusammenzufassen. Eine Verpackungsmaschine zum Aufsetzen solcher oberen Greifkartonverpackungen wird in der Patentschrift EP 1 075 419 B1 beschrieben. Hierbei sind die Artikel in einer Kiste angeordnet und die Greifkartonverpackung wird von oben auf den mindestens einen in der Kiste angeordneten Artikel aufgesetzt. Insbesondere ist in der Kiste eine Mehrzahl von Artikeln angeordnet und durch das Aufsetzen einer geringeren Anzahl an oberen Greifkartonverpackungen werden Untergruppen gebildet, die jeweils einen Teil der in der Kiste angeordneten Artikel zusammenfassen.

Aus der DE 10 2011 051 926 A1 ist zudem eine Vorrichtung zum Greifen von Artikeln und ein Greifkopf gemäß dem Oberbegriff des Anspruchs 1 bekannt. Die Vorrichtung umfasst eine Festhalteeinrichtung, die über eine Betätigungseinrichtung aktiviert werden kann. Hierbei wirkt die Festhalteeinrichtung mit der Betätigungseinrichtung derart zusammen, dass sie durch deren Betätigung zumindest zwischen einem ersten mechanisch stabilen Zustand, bei welchem die Festhalteeinrichtung die Artikel greift, und einem weiteren oder zweiten mechanisch stabilen Zustand, bei welchem die Festhalteeinrichtung die Artikel nicht greift, überführbar ist.

Es sind inzwischen viele verschiedene Dosengrößen gebräuchlich und erhältlich. Während herkömmlicherweise Dosen mit Fassungsvermögen von 0,33 oder 0,5 Litern angeboten wurden, finden sich inzwischen vielfach auch Dosen mit 0,15, 0,25, 0,355 Litern oder anderen Volumina.

Weiterhin sind unterschiedliche Dosenformen bekannt. Während der Deckel von Standarddosen einen deutlich geringeren Durchmesser aufweist als der Dosenzylinder an sich, sind der Zylinderdurchmesser und der Deckeldurchmesser bei sog. Slim-Dosen oder Sleek-Dosen im Wesentlichen gleich oder annähernd gleich ausgebildet.

Um eine Umverpackung anzubringen, werden die Dosen in Gruppen zusammengestellt, wobei die Anordnung und Anzahl der in Gruppen zusammengestellten Dosen gemäß der herzustellenden Verpackungseinheit definiert ist. Die als Gruppe zusammengestellten Standard-Dosen sind dabei insbesondere Stoß-an Stoß angeordnet und berühren einander an Kontaktflächen. Beim Überführen der Dosenzusammenstellung in ein entsprechendes Verpackungsmodul werden die Standard-Dosen jeweils am Dosenrand und/oder Dosendeckel mit Vakuumsaugern angesaugt und angehoben. Dazu muss der Vakuumsauger im Saugbereich einen größeren Durchmesser als der Dosenrand aufweisen, wobei der Durchmesser gleichzeitig kleiner als der maximale Außendurchmesser der Standard-Dose sein muss, damit die Anordnung der direkt aneinander stehenden Standard-Dosen nicht verschoben wird.

Bisher bekannte Greifvorrichtungen, welche Getränkedosen entgegennehmen und zur weiteren Handhabung bzw. Verpackung entlang eines Verbringungsweges bewegen können, besitzen einen komplizierten Aufbau. Durch die vorherig beschriebene Erfassung mittels Vakuumsaugern lässt sich auch nicht mit Gewissheit ausschließen, dass sich Getränkedosen ungewollt von der Greifvorrichtung lösen. Insbesondere kann dies der Fall sein, sofern eine Position von Getränkedosen bei einer Entgegennahme nicht mit einer erwarteten Soll-Position übereinstimmt. Dies kann beispielsweise sein, sofern einzelne Getränkedosen vor einer Entgegennahme ungewollt verrutschen oder sofern durch weitere mechanisch Ursachen ihre jeweilige Position verändert wird. In der Praxis sind daher häufig Führungsgeländer notwendig, um die Getränkedosen in genauer Anordnung in den Erfassungsbereich einer Greifvorrichtung bewegen zu können. Um einen Aufbau einer Verpackungsvorrichtung nach Möglichkeit einfach und kompakt auszubilden, wären Verpackungsvorrichtungen wünschenswert, bei welchen auf solche Führungsgeländer verzichtet werden kann.

Eine Aufgabe der Erfindung ist daher einen Greifer für Getränkedosen bereitzustellen, der sich durch einen einfachen Aufbau auszeichnet und der Getränkedosen mit hoher Sicherheit entgegennehmen und handhaben kann. Weiter kann eine Aufgabe darin gesehen werden, ein entsprechendes Verfahren bereitzustellen, welches einfach umgesetzt werden kann und mit welchem Getränkedosen mit hoher Sicherheit entgegengenommen und gehandhabt werden können.

Die obigen Aufgaben werden durch die Gegenstände gelöst, welche die Merkmale in den unabhängigen Ansprüchen umfassen. Ausführungsformen werden durch die abhängigen Ansprüche beschrieben.

Die Erfindung betrifft einen Greifer für Getränkedosen. In diversen Ausführungsformen kann der Greifer zum Entgegennehmen genaue einer Getränkedose ausgebildet sein. Der Greifer, welcher sich somit grundsätzlich zum Entgegennehmen von Getränkedosen eignet, kann in der Praxis auch dafür vorgesehen sein, um Dosen mit anderem Inhalt, wie beispielsweise Lebensmitteln, entgegenzunehmen. Eine Verwendung des Greifers ist daher nicht auf Getränkedosen beschränkt.

Der Greifer umfasst mindestens ein Greifmittel zum formschlüssigen Untergreifen einer jeweiligen Getränkedose im Bereich eines oberen Falzes, welchen oberen Falz eine jeweilige Getränkedose ausbildet. Das mindestens eine Greifmittel kann durch mindestens einen Hebel ausgebildet sein, welcher mindestens eine Hebel zum Entgegennehmen und/oder zum Freigeben einer jeweiligen Getränkedose um einen bestimmten Drehpunkt gedreht werden kann. Alternativ oder ergänzend hierzu kann der mindestens eine Hebel reversibel elastisch verformbar ausgebildet sein. Es ist vorstellbar, dass das mindestens eine Greifmittel bzw. dass der mindestens eine Hebel zumindest bereichsweise durch Kunststoff ausgebildet ist.

Weiter umfasst der Greifer wenigstens eine Zentrierung, über welche wenigstens eine Zentrierung die jeweilige Getränkedose in eine definierte Ausrichtung bringbar ist, in welcher definierten Ausrichtung das mindestens eine Greifmittel eine jeweilige Getränkedose im Bereich ihres oberen Falzes formschlüssig untergreifen kann.

Der Greifer kann ggf. wenigstens einen Stößel umfassen, welcher wenigstens eine Stößel mit dem mindestens einen Greifmittel derart zusammenwirkt, dass ein jeweiliger formschlüssiger Untergriff des mindestens einen Greifmittel im Bereich des oberen Falzes mittels einer linearen Betätigungsbewegung des wenigstens einen Stößels aufgehoben werden kann. Ein Endbereich des mindestens einen Greifmittels kann ggf. vom wenigstens einen Stößel gehalten werden bzw. im wenigstens einen Stößel gelagert sein. Insbesondere kann es sein, dass ein Endbereich des mindestens einen Greifmittels formschlüssig und/oder klemmend vom wenigstens einen Stößel gehalten ist und/oder formschlüssig und/oder klemmend im wenigstens einen Stößel gelagert ist.

Alternativ oder ergänzend hierzu kann es sein, dass der wenigstens eine Stößel mit dem mindestens einen Greifmittel derart zusammenwirkt, dass das mindestens eine Greifmittel zum Halten einer jeweiligen Getränkedose im Bereich des jeweiligen oberen Falzes mittels einer linearen Betätigungsbewegung des wenigstens einen Stößels eine Klemmkraft auf die Getränkedose aufbringen kann.

Darüber hinaus ist denkbar, dass der wenigstens eine Stößel mit dem mindestens einen Greifmittel derart zusammenwirkt, dass die zum Halten einer jeweiligen Getränkedose im Bereich des jeweiligen oberen Falzes aufgebrachte Klemmkraft mittels einer weiteren Betätigungsbewegung des wenigstens einen Stößels, welche weitere Betätigungsbewegung vorzugsweise in entgegengesetzter Richtung verläuft, aufgehoben werden kann.

Auch kann es sein, dass der Greifer mehrere Greifmittel umfasst, welchen mehreren Greifmitteln ein gemeinsamer Stößel zugeordnet ist, wobei der gemeinsame Stößel mit den mehreren Greifmitteln derart zusammenwirkt, dass ein jeweiliger formschlüssiger Untergriff der mehreren Greifmittel im Bereich des oberen Falzes mittels einer linearen Betätigungsbewegung des gemeinsamen Stößels aufgehoben werden kann. Die mehreren Greifmittel können radial vom gemeinsamen Stößel wegweisen bzw. in radialer Richtung vom gemeinsamen Stößel abstehen.

Alternativ oder ergänzend hierzu kann es sein, dass der Greifer mehrere Greifmittel umfasst, welchen mehreren Greifmitteln ein gemeinsamer Stößel zugeordnet ist, wobei der gemeinsame Stößel mit den mehreren Greifmitteln derart zusammenwirkt, dass die mehreren Greifmittel zum Halten der jeweiligen Getränkedose im Bereich des jeweiligen oberen Falzes mittels einer linearen Betätigungsbewegung des gemeinsamen Stößels eine jeweilige Klemmkraft auf die jeweilige Getränkedose aufbringen können.

Auch kann es sein, dass der wenigstens eine Stößel oder der gemeinsame Stößel ein Gewinde ausbildet, welches mit einem korrespondierenden Gegengewinde des Greifers in Verbindung steht, so dass der wenigstens eine Stößel oder der gemeinsame Stößel durch eine vorzugsweise um seine Längsachse verlaufende Drehbewegung eine jeweilige lineare Betätigungsbewegung ausführen kann. Alternativ oder ergänzend hierzu kann es sein, dass der wenigstens eine Stößel oder der gemeinsame Stößel zum Ausführen einer jeweiligen linearen Betätigungsbewegung pneumatisch ansteuerbar ist. Das Gegengewinde des Greifers kann ggf. durch eine Befestigungsplatte des Greifers und/oder durch ein Kugelgelenk des Greifers bereitgestellt werden, welches Kugelgelenk nachfolgend noch beschrieben wird.

Weiter kann es sein, dass der Greifer mindestens eine Rückstellfeder umfasst, welche mindestens eine Rückstellfeder den Stößel oder den gemeinsamen Stößel nach der durchgeführten linearen Betätigungsbewegung zum Rückführen in eine Ausgangsposition mit Federkraft beaufschlagen kann. Alternativ oder ergänzend hierzu kann es sein, dass die mindestens eine Rückstellfeder das mindestens eine Greifmittel kraftbeaufschlagt im Bereich des oberen Falzes gegen die jeweilige Getränkedose drücken kann.

Denkbar ist, dass das mindestens eine Greifmittel zum formschlüssigen Untergreifen der Getränkedose im Bereich des oberen Falzes mindestens ein als Haken ausgebildetes Einlegeteil umfasst, welches mindestens eine als Haken ausgebildete Einlegeteil als austauschbarer Bestandteil des mindestens einen Greifmittels ausgebildet ist. Das mindestens eine als Haken ausgebildete Einlegeteil kann ggf. durch Stahl, durch Aluminium und/oder durch Kunststoff ausgebildet sein.

Weiter kann der Greifer wenigstens eine Drehstabfeder umfassen, mit welcher wenigstens einen Drehstabfeder das mindestens eine Greifmittel in Verbindung steht, wobei das mindestens eine Greifmittel bei einem formschlüssigen Untergreifen einer jeweiligen Getränkedose über die wenigstens eine Drehstabfeder in ihrer Position gehalten wird und wobei der formschlüssige Untergriff des mindestens einen Greifmittel durch federelastische Bewegung des mindestens einen Greifmittel gegen die Federkraft der wenigstens einen Drehstabfeder aufhebbar ist. In diversen Ausführungsformen kann können jedem Greifmittel der mehreren Greifmittel zwei Drehstabfedern zugeordnet sein, welche auf gegenüberliegenden Seiten an das jeweilige Greifmittel anschließen bzw. welche auf gegenüberliegenden Seiten mit dem jeweiligen Greifmittel verbunden sind.

Der Greifer kann ggf. ein Kugelgelenk umfassen, über welches Kugelgelenk das mindestens eine Greifmittel und/oder die wenigstens eine Zentrierung und/oder der wenigstens eine Stößel bzw. der gemeinsame Stößel schwenkbeweglich gelagert sind. Denkbar ist hierbei, dass der Greifer eine Befestigungsplatte und ein Formteil besitzt. Das Formteil kann die wenigstens eine Zentrierung ausbilden. Weiter können das Formteil und die Befestigungsplatte zusammen das Kugelgelenk ausbilden. Für diverse Ausführungsformen ist zudem vorstellbar, dass das Formteil relativ zur Befestigungsplatte in axialer Richtung bzw. Z-Richtung verschoben werden kann.

Auch kann der Greifer wenigstens eine Feder umfassen, welche vorzugsweise durch mehrere Blattfedern ausgebildet ist und über welche wenigstens eine Feder eine Rückstellkraft für das mindestens eine Greifmittel und/oder für die wenigstens eine Zentrierung und/oder für den wenigstens einen Stößel bzw. den gemeinsamen Stößel bei einer Schwenkbewegung des Kugelgelenks bereitgestellt wird. Die wenigstens eine Feder, welche vorzugsweise durch mehrere Blattfedern ausgebildet wird, kann mit dem vorhergehend bereits beschriebenen Formteil sowie mit der vorherig bereits beschriebenen Befestigungsplatte in Verbindung stehen.

Die Erfindung betrifft einen Greifkopf für mehrere Getränkedosen, welche mehreren Getränkedosen aneinander anstehen. Der Greifkopf umfasst mindestens zwei Greifer gemäß mindestens einem Ausführungsbeispiel der vorhergehenden Beschreibung, wobei ein jeweiliger Greifer zum Greifen einer jeweiligen Getränkedose der mehreren Getränkedosen ausgebildet ist. Ein jeweiliger Greifer der mindestens zwei Greifer kann eine jeweilige Befestigungsplatte ausbilden, wobei die Befestigungsplatten der mindestens zwei Greifer bündig aneinander anliegen. Eine Anzahl der Greifer des Greifkopfes kann einer Anzahl an jeweils entgegenzunehmenden Getränkedosen entsprechen. In der Praxis kann ein Greifkopf beispielsweise genau sechs Greifer oder genau acht Greifer besitzen.

Bei dem Greifkopf ist erfindungsgemäß vorgesehen, dass die wenigstens eine Zentrierung des jeweiligen Greifers derart positioniert ist, dass die wenigstens eine Zentrierung bei einer Entgegennahme einer jeweiligen Getränkedose mit einer Außenmantelfläche der jeweiligen Getränkedose in wenigstens einem definierten Bereich in Oberflächenkontakt gelangt, welcher wenigstens eine definierte Bereich gegenüber mindestens einem Kontaktbereich, bei welchem die Getränkedose an mindestens einer weiteren Getränkedose ansteht, entlang des Umfangsverlaufs der jeweiligen Getränkedose versetzt positioniert ist.

Somit kann der Greifkopf zum Entgegennehmen mehrerer Getränkedosen ausgebildet sein, welche mehreren Getränkedosen jeweils durch mehrere aneinander anstehende Slimline-Dosen bzw. Sleek-Dosen ausgebildet sind.

Die Erfindung betrifft darüber hinaus ein Verfahren gemäß Anspruch 11 zum Entgegennehmen wenigstens einer Getränkedose über wenigstens einen Greifer. Merkmale, welche vorhergehend bereits zu diversen Ausführungsformen des Greifers bzw. des Greifkopfes beschrieben wurden, können ebenso bei den nachfolgenden Ausführungsformen des Verfahrens vorgesehen sein und werden nicht mehrfach erwähnt.

Ebenso können die zu den Ausführungsformen des Verfahrens beschriebenen Merkmale bei den Ausführungsformen des vorhergehend bereits beschriebenen Greifers bzw. Greifkopfes vorgesehen sein. Der Greifer bzw. Greifkopf kann ggf. zur Umsetzung der nachfolgend beschriebenen Ausführungsformen des erfindungsgemäßen Verfahrens ausgebildet sein.

Bei dem Verfahren ist vorgesehen, dass mindestens ein als Bestandteil des wenigstens einen Greifers ausgebildetes Greifmittel die wenigstens eine Getränkedose zur Entgegennahme im Bereich eines jeweiligen oberen Falzes, welcher jeweilige obere Falz von der jeweiligen Getränkedose ausgebildet wird, formschlüssig untergreift.

Es ist vorgesehen, dass die wenigstens eine Getränkedose über wenigstens eine als Bestandteil des wenigstens einen Greifers ausgebildete Zentrierung in eine definierte Ausrichtung gebracht wird, in welcher definierten Ausrichtung das mindestens eine Greifmittel des wenigstens einen Greifers eine jeweilige Getränkedose im Bereich des jeweiligen oberen Falzes formschlüssig untergreifen kann.

Hierbei kann es sein, dass der Greifer in Richtung von oben kommend auf die jeweilige wenigstens eine Getränkedose aufgesetzt wird, wobei die wenigstens eine als Bestandteil des wenigstens einen Greifers ausgebildete Zentrierung in Oberflächenkontakt mit der wenigstens einen Getränkedose gelangt und hierbei die wenigstens eine Getränkedose in eine definierte Ausrichtung bringt, in welcher definierten Ausrichtung das mindestens eine Greifmittel des wenigstens einen Greifers eine jeweilige Getränkedose im Bereich des jeweiligen oberen Falzes formschlüssig untergreifen kann.

Es kann sein, dass der wenigstens eine Greifer wenigstens einen Stößel besitzt, wobei der wenigstens eine Stößel eine lineare Betätigungsbewegung ausführt, woraus resultierend der formschlüssige Untergriff des mindestens einen Greifmittels aufgehoben wird.

Weiter kann es sein, dass der wenigstens eine Greifer wenigstens einen Stößel besitzt, wobei der wenigstens eine Stößel eine lineare Betätigungsbewegung ausführt, woraus resultierend über das mindestens eine Greifmittel eine Klemmkraft zum Halten der jeweiligen Getränkedose auf die jeweilige Getränkedose aufgebracht wird.

Auch kann es sein, dass der wenigstens eine Greifer wenigstens einen Stößel besitzt, wobei der wenigstens eine Stößel eine lineare Betätigungsbewegung ausführt, woraus resultierend eine bis dahin zum Halten der jeweiligen Getränkedose über das mindestens eine Greifmittel auf die jeweilige Getränkedose aufgebrachte Klemmkraft aufgehoben wird.

Auch kann es sein, dass ein Greifer oder mehrere Greifer jeweils mehrere Greifmittel besitzen, welchen mehreren Greifmitteln ein gemeinsamer Stößel des jeweiligen Greifers zugeordnet ist, wobei der gemeinsame Stößel eine lineare Betätigungsbewegung ausführt, woraus resultierend zeitgleich oder zumindest näherungsweise zeitgleich die formschlüssigen Untergriffe der mehreren Greifmittel aufgehoben werden.

Denkbar ist, dass ein Greifer oder mehrere Greifer jeweils mehrere Greifmittel besitzen, welchen mehreren Greifmitteln ein gemeinsamer Stößels des jeweiligen Greifers zugeordnet ist, wobei der gemeinsame Stößel eine lineare Betätigungsbewegung ausführt, woraus resultierend die mehreren Greifmittel zum Halten einer jeweiligen Getränkedose zeitgleich oder zumindest näherungsweise zeitgleich eine Klemmkraft auf die jeweilige Getränkedose aufbringen.

Weiter ist denkbar, dass ein Greifer oder mehrere Greifer jeweils mehrere Greifmittel besitzen, welchen mehreren Greifmitteln ein gemeinsamer Stößel des jeweiligen Greifers zugeordnet ist, wobei der gemeinsame Stößel eine lineare Betätigungsbewegung bzw. eine weitere lineare Betätigungsbewegung ausführt, woraus resultierend zeitgleich oder zumindest näherungsweise zeitgleich die bis dahin zum Halten der jeweiligen Getränkedose über die mehreren Greifmittel auf die jeweilige Getränkedose aufgebrachten Klemmkräfte aufgehoben werden.

Vorstellbar ist, dass der wenigstens eine Stößel oder der gemeinsame Stößel ein Gewinde ausbildet, welches mit einem korrespondierenden Gegengewinde des jeweiligen Greifers verbunden ist und wobei der wenigstens eine Stößel oder der gemeinsame Stößel vorzugsweise um seine Längsachse gedreht wird und hierdurch eine jeweilige lineare Betätigungsbewegung ausführt. Alternativ oder ergänzend hierzu kann es sein, dass der wenigstens eine Stößel zum Ausführen der linearen Betätigungsbewegung pneumatisch angesteuert wird.

Es kann sein, dass der wenigstens eine Greifer wenigstens eine Drehstabfeder besitzt, mit welcher wenigstens einen Drehstabfeder das mindestens eine Greifmittel in Verbindung steht, wobei das mindestens eine Greifmittel bei einer Entgegennahme einer jeweiligen Getränkedose unter den oberen Falz einer jeweiligen Getränkedose schnappt und wobei der formschlüssige Untergriff des mindestens einen Greifmittels hierauf folgend durch eine federelastische Bewegung des mindestens einen Greifmittels gegen eine Federkraft der wenigstens einen Drehstabfeder aufgehoben wird.

Weiter kann es sein, dass der wenigstens eine Greifer ein Kugelgelenk besitzt, mittels welchen Kugelgelenkes das jeweilige mindestens eine Greifmittel und/oder die jeweilige wenigstens eine Zentrierung und/oder der jeweilige wenigstens eine Stößel bzw. der jeweilige gemeinsame Stößel bedarfsweise schwenkt, sofern eine Ist-Position einer jeweiligen Getränkedose bei einer Entgegennahme über den jeweiligen wenigstens einen Greifer von einer erwarteten Soll-Position einer jeweiligen Getränkedose abweicht.

Denkbar ist auch, dass der wenigstens eine Greifer wenigstens eine Feder umfasst, welche wenigstens eine Feder vorzugsweise durch mehrere Blattfedern ausgebildet ist und welche wenigstens eine Feder das jeweilige mindestens eine Greifmittel und/oder die jeweilige wenigstens eine Zentrierung und/oder den jeweiligen wenigstens einen Stößel bzw. den jeweiligen gemeinsamen Stößel bei einer durchgeführten Schwenkbewegung nach Entgegennahme der jeweiligen wenigstens einen Getränkedose in eine Ausgangslage mit Federkraft zurückschwenkt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A und 1B zeigen eine schematische Perspektivansicht sowie einen schematischen Schnitt durch eine Ausführungsform eines erfindungsgemäßen Greifers.
Fig. 2 zeigt einzelne Details der Ausführungsform eines Greifers nach Figuren 1A und 1B.
Figuren 3A und 3B verdeutlichen eine Entgegennahme einer Getränkedose mittels der Ausführungsform eines Greifers nach Figuren 1 und 2.
Fig. 4 zeigt eine Schnittdarstellung durch eine weitere Ausführungsform eines erfindungsgemäßen Greifers.
Fig. 5 zeigt eine weitere Schnittdarstellung durch die Ausführungsform eines Greifers nach Fig. 4.
Fig. 6 zeigt in insgesamt fünf schematischen Darstellungen (Fig. 6A, Fig. 6B, Fig. 6C, Fig. 6D und Fig. 6E) eine weitere Ausführungsform eines erfindungsgemäßen Greifers.
Fig. 7 zeigt in insgesamt fünf schematischen Darstellungen (Fig. 7A, Fig. 7B, Fig. 7C, Fig. 7D und Fig. 7E) eine weitere Ausführungsform eines erfindungsgemäßen Greifers.
Fig. 8 zeigt eine schematische Perspektivansicht einer Ausführungsform eines erfindungsgemäßen Greifkopfes.
Fig. 9 zeigt in insgesamt vier schematischen Perspektiv-, Seiten- oder Schnittansichten (Fig. 9A, Fig. 9B, Fig. 9C und Fig. 9D) eine Ausführungsform einer Greifeinrichtung, welche mehrere Greifer entsprechend einer Ausführungsform der vorliegenden Erfindung umfasst.
Fig. 10 zeigt eine schematische Ansicht einer Getränkedose, wie sie mittels der Ausführungsformen eines Greifers bzw. eines Greifkopfes nach Figuren 1 bis 9 jeweils entgegengenommen werden kann.
Fig. 11 zeigt im Flussdiagramm einzelne Schritte, wie sie bei diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Es sei an dieser Stelle ausdrücklich erwähnt, dass alle Aspekte und Ausführungsvarianten, die im Zusammenhang mit dem erfindungsgemäßen Greifer bzw. Greifkopf erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zum erfindungsgemäßen Greifer oder Greifkopf von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte des erfindungsgemäßen Greifers bzw. Greifkopfes betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für den erfindungsgemäßen Greifer bzw. Greifkopf.

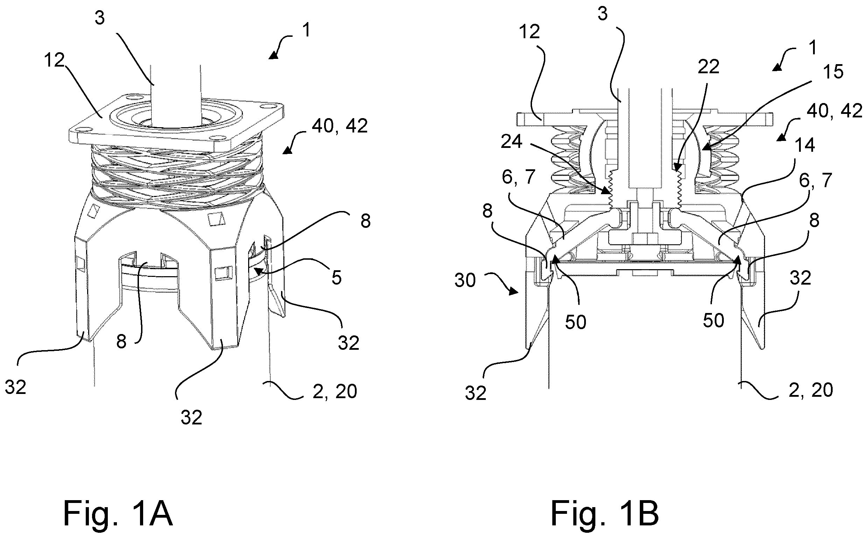

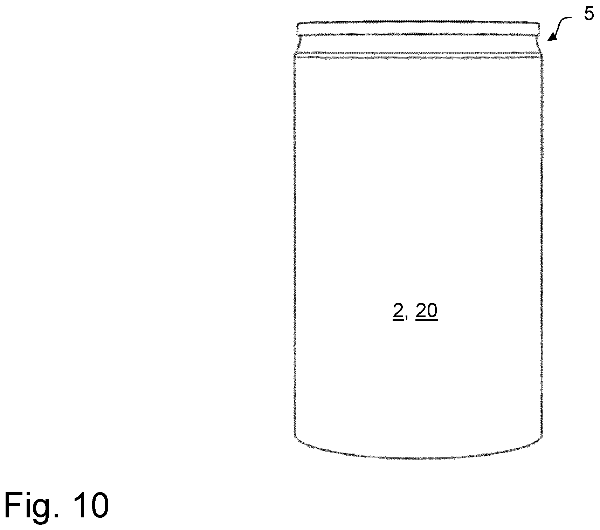

Die Fig. 1A zeigt eine schematische Perspektivansicht und Fig. 1B zeigt einen schematischen Schnitt durch eine Ausführungsform eines erfindungsgemäßen Greifers 1. Mittels des hier gezeigten Greifers 1 kann eine jeweilige Getränkedose 20 entgegengenommen werden, wie sie sich beispielhaft in der Fig. 10 dargestellt findet. Um dies zu erreichen, umfasst der Greifer 1 mehrere Greifmittel 6, die vorliegend jeweils durch einen Hebel 7 ausgebildet sind und an ihrem in Richtung nach unten weisenden Ende einen Haken 8 besitzen.

An einer Befestigungsplatte 12 des Greifers 1 ist über ein Kugelgelenk 15 (vgl. Fig. 1B) eine Zentrierung 30 angeordnet, welche Zentrierung 30 vorliegend vier Zentrierfinger 32 besitzt. Um eine Getränkedose 20 entgegennehmen zu können, wird der Greifer 1 in Richtung von oben kommend auf die jeweilige Getränkedose 20 aufgesetzt. Hierbei treten zunächst die vier Zentrierfinger 32 mit einer Außenmantelfläche 2 der Getränkedose 20 in Anlage. Sofern sich die Getränkedose 20 hierbei nicht an einer erwarteten Soll-Position befindet, wird die Getränkedose 20 mittels der Zentrierfinger 32 verschoben und in eine Position gebracht, welche sich zur Entgegennahme der Getränkedose 20 über die Greifmittel 6 bzw. über die Haken 8 eignet.

Der Greifer 1 kann die Getränkedose 20 daher mittels der Zentrierung 30 ausrichten. In der perspektivischen Darstellung nach Fig. 1A ist die Getränkedose 20 noch nicht über den Greifer 1 entgegengenommen. Ausgehend von der Position nach Fig. 1A wurde der Greifer 1 weiter in Richtung nach unten bzw. weiter in Richtung der Getränkedose 20 bewegt, wobei die Haken 8, welche über die Greifmittel 6 ausgebildet werden, die Getränkedose 20 im Bereich ihres oberen Falzes 5 untergreifen und sodann entsprechend Fig. 1B formschlüssig halten.

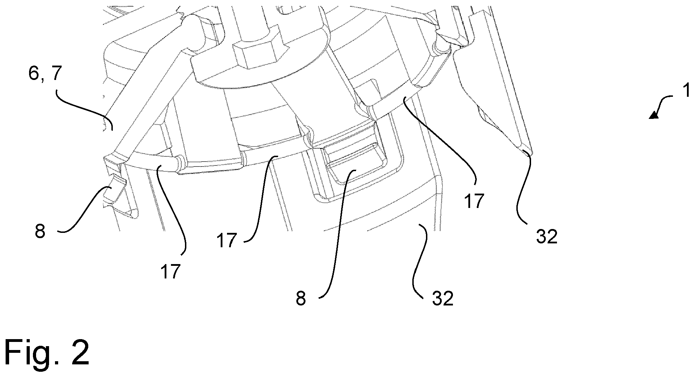

Die Greifmittel 6 stehen, wie nachfolgend zu Fig. 2 noch beschrieben, jeweils mit einer Drehstabfeder 17 in Verbindung, so dass der Haken 8 des Greifmittels 6 bei Aufsetzen des Greifers 1 auf die Getränkedose 20 um den Drehpunkt 50 gedreht werden kann und aufgrund der Rückstellkraft der Drehstabfeder 17 sodann in den oberen Falz 5 schnappt und die Getränkedose 20 im Bereich des oberen Falzes 5, wie in Fig. 1B zu erkennen, formschlüssig untergreift.

Die Ausführungsform des Greifers 1 gemäß Figuren 1A und 1B besitzt genau vier Greifmittel 6, welche jeweils an ihrem in Richtung nach unten weisenden Ende einen Haken 8 besitzen. Diese Anzahl ist lediglich beispielhaft zu verstehen, so dass diverse Ausführungsformen eines Greifers 1 auch mehr als genau vier Greifmittel 6 oder weniger als genau vier Greifmittel 6 besitzen können.

Auch die Anordnung bzw. der Versatz, um welchen die Greifmittel 6 um die Längsachse der jeweiligen entgegenzunehmenden Getränkedose versetzt sind, kann sich bedarfsweise von der Anordnung bzw. dem Versatz entsprechend der Ausführungsform nach Figuren 1A und 1B unterscheiden.

Die Greifmittel 6 bzw. die Haken 8 sind vorliegend zueinander um 90° versetzt angeordnet, wodurch die Getränkedose 20 sehr stabil gehalten werden kann. Auch zeigt die Fig. 1B hierbei, dass die Zentrierfinger 32 mit der Außenmantelfläche 2 der Getränkedose 20 in Oberflächenkontakt bleiben, wenn der Falz 5 der Getränkedose 20 vom Greifmittel 6 bzw. vom Haken 8 untergriffen ist.

Zusätzlich zu ihrer Funktion, wonach die Zentrierfinger 32 die Getränkedose 20 zur Entgegennahme über die Greifmittel 6 ausrichten, wird die Getränkedose 20 unter Oberflächenkontakt ihrer Außenmantelfläche 2 über die Zentrierfinger 32 in ihrer Position gehalten, sofern der Greifer 1 die jeweilige entgegengenommene Getränkedose 20 transportiert bzw. entlang eines vorgegebenen Verbringungsweges befördert.

Auch wird aus der perspektivischen Ansicht der Fig. 1A deutlich, dass auf jeden Zentrierfinger 32 entlang des Umfangsverlaufs der Getränkedose 20 ein Haken 8 folgt. Zwischen zwei Zentrierfingern 32 wird daher durch den Greifer 1 jeweils ein Haken 8 bzw. jeweils ein Greifmittel 6 ausgebildet.

Sofern die Getränkedose 20 nach einer Handhabung über den Greifer 1 freigegeben werden soll, ist es hierzu notwendig, dass das bis dahin bestehende Untergreifen der Getränkedose 20 über die Haken 8 im Bereich des oberen Falzes 5 aufgehoben wird. Die Haken 8 bzw. die Greifmittel 6 müssen somit jeweils aus dem Falz 5 bewegt werden, so dass die Getränkedose 20 hierauf nicht mehr formschlüssig von den Greifmitteln 6 erfasst ist. Hierzu besitzt der Greifer 1 einen Stößel 3, welcher eine lineare Betätigungsbewegung durchführen kann, um den durch die Haken 8 bestehenden Untergriff zu lösen.

Der Längsschnitt der Fig. 1B verdeutlicht hierbei, dass der Stößel 3 ein Gewinde 22 ausbildet, welches mit einem korrespondierenden Gegengewinde 24 des Greifers 1 in Eingriff steht. Wird der Stößel 3 gedreht, so bewegt sich der Stößel aufgrund des korrespondierenden Eingriffes zwischen Gewinde 22 und Gegengewinde 24 linear und in Abhängigkeit der jeweiligen Drehrichtung entweder in vertikaler Richtung nach oben oder in vertikaler Richtung nach unten.

Sämtliche Greifmittel 6 werden über den Stößel 3 gehalten bzw. sind durch den Stößel 3 aufgenommen, so dass durch eine einzige lineare Betätigungsbewegung des Stößels 3 sämtliche Haken 8 aus dem oberen Falz 5 der Getränkedose 20 herausbewegt werden können. Durch eine lineare Betätigungsbewegung des Stößels 3 in Richtung nach unten werden die Greifmittel 6 derart um den Drehpunkt 50 gedreht, dass die Haken 8 hierbei den oberen Falz 5 der Getränkedose 20 verlassen, wodurch die Getränkedose 20 nicht mehr formschlüssig über die Greifmittel 6 gehalten wird. Die Greifmittel 6 bzw. Hebel 7 sind somit reversibel elastisch verformbar, wodurch die Greifmittel 6 bzw. die Haken 7 um den Drehpunkt 50 gedreht werden können.

Wie vorhergehend bereits erwähnt, stehen die Greifmittel 6 mit Drehstabfedern 17 in Verbindung, welche in der vergrößerten perspektivischen Darstellung der Fig. 2 detailliert zu erkennen sind. Wird der Stößel 3 nach einer Freigabe einer jeweiligen Getränkedose 20 linear in Richtung nach oben zurückbewegt, so schwenken die Drehstabfedern 17 hierbei die Greifmittel 6 bzw. die Haken 8 in eine Ausgangsposition zurück, aus welcher Ausgangsposition die Greifmittel 6 bzw. die Haken 8 bei Aufsetzen des Greifers 1 auf eine weitere Getränkedose 20 wieder unter den oberen Falz 5 der jeweiligen weiteren Getränkedose 20 schnappen können.

In der Praxis kann es ggf. sein, dass Getränkedosen 20 erfasst werden sollen, welche eine verhältnismäßig hohe Masse besitzen. Das formschlüssige Untergreifen einer solchen Getränkedose 20 im Bereich ihres oberen Falzes 5 und eine Klemmkraft zwischen einem jeweiligen Haken 8 und der Getränkedose 20, welche ggf. über die Drehstabfedern 17 (vgl. Fig. 2) auf die Haken 8 aufgebracht wird, kann ggf. nicht ausreichen, um eine solche Getränkedose 20 mit hoher Masse sicher halten zu können. Mittels des beschriebenen Funktionsprinzips des Greifers 1 besteht vorteilhafterweise auch die Möglichkeit, eine Klemmkraft, welche über die Haken 8 zum Halten der Getränkedose 20 aufgebracht wird, weiter zu vergrößern.

So sind die Greifmittel 6 bzw. Hebel 7, wie dies in Fig. 1B zu erkennen ist, formschlüssig über den Stößel 3 aufgenommen bzw. im Stößel 3 gelagert. Wird der Stößel 3 in linearer Richtung nach oben bewegt, so dreht sich das Greifmittel 6 hierbei zwangsweise um den Drehpunkt 50, wodurch eine Klemmkraft, mit welcher der jeweilige Haken 8 gegen die Getränkedose 20 drückt, weiter vergrößert wird.

In vielen Fällen kann jedoch ein formschlüssiger Untergriff einer jeweiligen Getränkedose 20 im Bereich des oberen Falzes 5 ausreichend sein, um die Getränkedose 20 mittels des Greifers 1 sicher transportieren zu können. Die ggf. zusätzliche Vergrößerung der Klemmkraft kann dann vorgenommen werden, sofern eine Getränkedose 20 eine vergleichsweise hohe Masse besitzt.

Um die jeweilige Getränkedose 20 über die Greifmittel 6 sicher entgegennehmen zu können, wird eine jeweilige Getränkedose 20 hierzu, wie bereits beschrieben, über die Zentrierfinger 32 ausgerichtet, sofern die Getränkedose 20 sich nicht exakt an einer zur Entgegennahme vorgesehenen Position befindet. Um eine Beschädigung der Getränkedose 20 hierbei zu vermeiden, hat es sich zunächst bewährt, wenn sich die Zentrierfinger 32 gemäß Figuren 1A und 1B in Richtung nach unten verjüngen. Da die Zentrierfinger 32 selbst starr oder relativ starr ausgebildet sind, hat es sich auch bewährt, wenn zusätzlich oder alternativ zur sich verjüngenden Formgebung der Zentrierfinger 32 ein Kugelgelenk 15 und mindestens eine Feder 40 vorgesehen sind. Die mindestens eine Feder 40 ist vorliegend durch mehrere Blattfedern 42 ausgebildet.

Der Längsschnitt der Fig. 1B zeigt weiterhin, dass das Kugelgelenk 15 durch die Befestigungsplatte 12 und durch ein Formteil 14 ausgebildet wird. Das Formteil 14 bildet zudem die Zentrierung 30 bzw. die Zentrierfinger 32 sowie das Gegengewinde 24 aus, mit welchem der Stößel 3 mit seinem korrespondierenden Gewinde 22 in Eingriff steht.

Tritt ein Zentrierfinger 32 mit einer Getränkedose 20 in Kontakt, welche sich nicht in einer zur Entgegennahme geeigneten Position befindet, so können die Zentrierfinger 32 mittels des Kugelgelenkes 15 gegen die Rückstellkraft der mindestens einen Feder 40 bzw. der Blattfedern 42 verschwenkt werden. Nach Entgegennahme der Getränkedose 20 oder bei Transport oder Getränkedose 20 mittels des Greifers 1 werden die Zentrierfinger 32 durch die Rückstellkraft der mindestens einen Feder 40 bzw. der Blattfedern 42 in eine Ausgangsposition zurück verschwenkt. Die mindestens eine Feder 40 bzw. die Blattfedern 42 stehen sowohl mit der Befestigungsplatte 12 als auch mit dem Formteil 14 mechanisch in Verbindung bzw. sind zwischen dem Formteil 14 und der Befestigungsplatte 12 angeordnet.

Die perspektivische Detailansicht der Fig. 2 zeigt einzelne Details der Ausführungsform eines Greifers 1 nach Figuren 1A und 1B. In der Darstellung der Fig. 2 sind nun die Drehstabfedern 17 zu erkennen, mit welchen die Greifmittel 6 bzw. die Hebel 7 in Verbindung stehen. Es kann hierbei sein, dass entsprechend Fig. 2 mehrere Drehstabfedern 17 vorgesehen sind, wobei benachbarte Greifmittel 6 mit jeweils einer zwischengeordneten Drehstabfeder 17 verbunden sind.

Alternativ hierzu ist auch denkbar, dass genau eine Drehstabfeder 17 vorgesehen ist, welche kreis- und/oder ringförmig verläuft und mit welcher genau einen Drehstabfeder 17 sämtliche Greifmittel 6 jeweils verbunden sind.

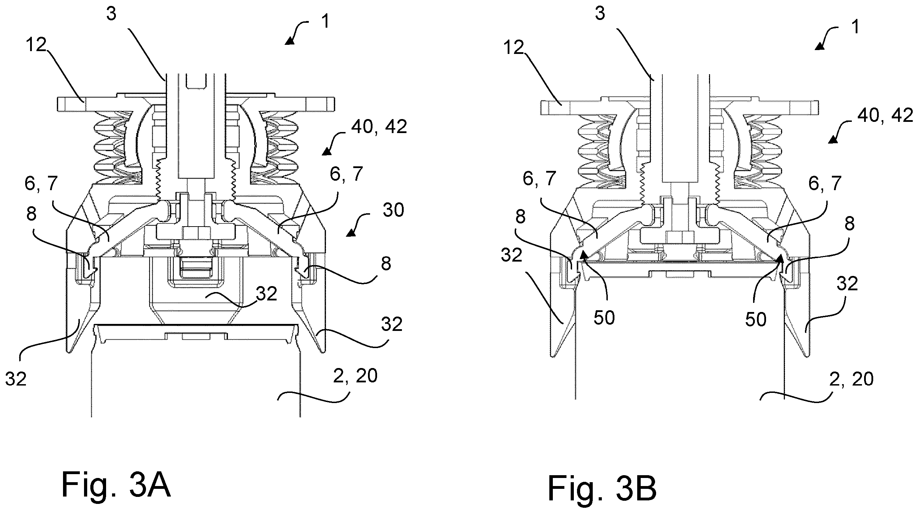

Die beiden Längsschnittdarstellungen der Figuren 3A und 3B verdeutlichen eine Entgegennahme einer Getränkedose 20 mittels der Ausführungsform eines Greifers 1 nach Figuren 1 und 2. In Fig. 3A ist der Greifer 1 noch oberhalb der Getränkedose 20 angeordnet. Über die Befestigungsplatte 12 kann der Greifer 1 an eine nicht mit dargestellte Handhabungseinrichtung gekoppelt sein, welche Handhabungseinrichtung den Greifer 1 in die Position nach Fig. 3A bewegt. Die Getränkedose 20 kann sich ggf. auf einer Horizontalfördereinrichtung befinden. Die Handhabungseinrichtung kann als Industrieroboter oder als Portalsystem ausgebildet sein.

Eine Zusammenschau der Figuren 3A und 3B verdeutlicht sodann die weitere Vorgehensweise bei einer Entgegennahme der Getränkedose 20. Der Greifer 1 wird in Richtung von oben kommend auf die Getränkedose 20 aufgesetzt, wobei die Zentrierfinger 32 mit einer Außenmantelfläche 2 der Getränkedose 20 in Oberflächenkontakt treten und die Getränkedose 20 bedarfsweise ausrichten, sofern ihre jeweilige Position nicht mit einer zur Entgegennahme geeigneten Soll-Position übereinstimmt. Während einer weiteren Bewegung des Greifers 1 in Richtung der Getränkedose 20 schnappen die Haken 8 in den oberen Falz 5, wodurch die Getränkedose 20 formschlüssig untergriffen wird und am Greifer 1 festgesetzt ist.

Sofern erforderlich, kann der Stößel 3 hierauf in linearer Richtung nach oben bewegt werden, wodurch eine Klemmkraft, mit welcher die Haken 8 die Getränkedose 20 im Bereich des oberen Falzes 5 greifen, zusätzlich vergrößert wird.

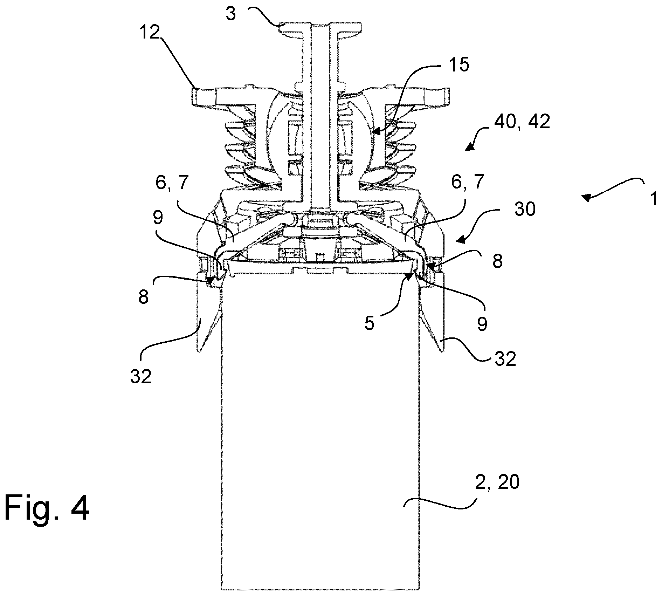

Die Fig. 4 zeigt eine Schnittdarstellung durch eine weitere Ausführungsform eines erfindungsgemäßen Greifers 1. Entsprechend der vorherig zu den Figuren 1 bis 3 beschriebenen Ausführungsform umfasst auch die Ausführungsform eines Greifers 1 nach Fig. 4 einen Stößel 3, eine Befestigungsplatte 12, ein Formteil 14, mindestens eine Feder 40, bei welcher es sich um Blattfedern 42 handelt, mehrere Greifmittel 6 bzw. Hebel 7 sowie eine Zentrierung 30 mit mehreren Zentrierfingern 32, welche eine Getränkedose 20 bedarfsweise ausrichten und während einer Handhabung stabilisieren können.

Bei der Ausführungsform nach Fig. 4 wird der Stößel 3 pneumatisch betätigt und kann bei einer jeweiligen pneumatischen Betätigung eine lineare Betätigungsbewegung ausführen, bei welcher die Haken 8 den oberen Falz 5 der Getränkedose 20 verlassen können, so dass die Getränkedose 20 hierdurch freigegeben wird. Da in der Praxis mittels eines Greifers 1 Getränkedosen 20 mit hoher Taktfrequenz gegriffen und transportiert werden, hat es sich gezeigt, dass die Greifmittel 6 im Bereich ihrer Haken 8 häufig zu Verschleißerscheinungen neigen.

Bei der Ausführungsform nach Fig. 4 werden die Haken 8 der Greifmittel 6 durch ein jeweiliges Einlegeteil 9 ausgebildet, welches jeweilige Einlegeteil 9 bei Verschleißerscheinungen bedarfsweise getauscht werden kann. Bewährt hat es sich, wenn die Einlegeteile 9 durch Stahl, durch Aluminium und/oder durch Kunststoff ausgebildet sind.

Durch die Austauschbarkeit der Einlegeteilt 9 kann gewährleistet werden, dass eine jeweilige Getränkedose 20 auch bei Verschleiß eines Hakens 8 weiterhin im Bereich ihres oberen Falzes 5 formschlüssig untergriffen und sicher transportiert werden kann. Ein Austausch des Greifers 1 wird hierdurch nicht notwendig, so dass der Greifer 1 eine lange Lebensdauer besitzt.

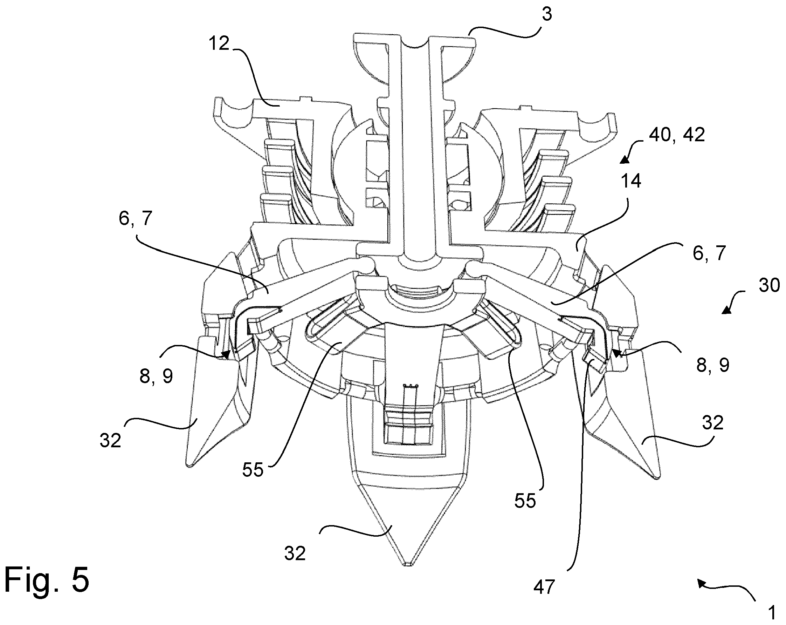

Die Fig. 5 zeigt eine weitere Schnittdarstellung durch die Ausführungsform eines Greifers 1 nach Fig. 4. In Fig. 5 sind nochmals die Einlegeteile 9 zu erkennen, welche die Haken 8 des Greifmittels 6 ausbilden und eine jeweilige Getränkedose 20 im Bereich ihres oberen Falzes 5 (vgl. Fig. 10) untergreifen können. Die Einlegeteile 9 sind formschlüssig durch einen verbleibenden Teil des jeweiligen Greifmittels 6 aufgenommen und können durch axiale Bewegung vom verbleibenden Teil des jeweiligen Greifmittels 6 abgezogen werden.

Die Ausführungsform eines Greifers 1 nach Figuren 4 und 5 umfasst zudem mehrere Rückstellfedern 55, die mit dem Stößel 3 verbunden sind. Zeitlich nachdem der Stößel 3 zum Aufheben des Untergriffs der Haken 8 im Bereich des oberen Falzes 5 in vertikaler Richtung nach unten bewegt wurde, können die Rückstellfedern 55 den Stößel 3 mit Federkraft in eine Ausgangsposition in linearer Richtung zurückbewegen.

Da die Greifmittel 6 mit dem Stößel 3 in Verbindung stehen und da die Rückstellfedern 55 den Stößel 3 mit Federkraft in linearer Richtung nach oben drücken, können die Haken 8 bei einer entgegengenommenen Getränkedose 20 mittels der Rückstellfedern 55 zudem kraftbeaufschlagt gegen die jeweilige Getränkedose 20 gedrückt werden. Mittels einer jeweiligen Federkraft der Rückstellfedern 55 wird eine jeweilige Getränkedose 20 somit klemmend über die Haken 8 gehalten, wodurch eine jeweilige Getränkedose 20 mit keinem oder lediglich einem geringen Risiko eines ungewollten Lösens über den Greifer 1 transportiert werden kann.

Die Rückstellfedern 55 entsprechend der Ausführungsform nach Figuren 4 und 5 sowie die als Haken 8 ausgebildeten Einlegeteilte 9 entsprechend der Ausführungsform nach Figuren 4 und 5 können auch bei der Ausführungsform nach Figuren 1 bis 3 vorgesehen sein.

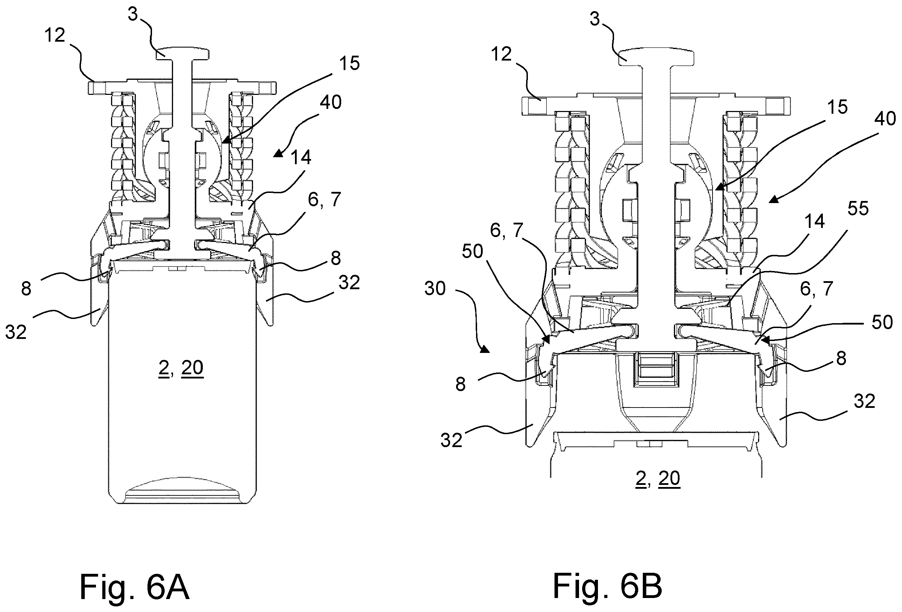

Die Figuren 6A bis 6E zeigen in mehreren schematischen Darstellungen eine weitere Ausführungsform eines erfindungsgemäßen Greifers 1. Entsprechend der vorherig zu den Figuren 1 bis 5 beschriebenen Ausführungsformen umfasst auch die Ausführungsform eines Greifers 1 nach Figuren 6A bis 6E einen Stößel 3, eine Befestigungsplatte 12, ein Formteil 14, mindestens eine Feder 40, mehrere Greifmittel 6 bzw. Hebel 7 sowie eine Zentrierung 30 mit mehreren Zentrierfingern 32, welche ein Getränkedose 20 bedarfsweise ausrichten und während einer Handhabung stabilisieren können.

In der Darstellung der Fig. 6A ist die Getränkedose mit der Bezugsziffer 20 bezeichnet. Die Feder 40 ist außenliegend bzw. von außen zugänglich und beaufschlagt das Formteil 14 gegenüber der Befestigungsplatte 12 mit einer Rückstellkraft, sofern das Formteil 14 und die Befestigungsplatte 12 relativ zueinander verschwenkt werden oder relativ zueinander in axialer Richtung bewegt werden. Ein solches Verschwenken kann dann erfolgen, wenn die Zentrierfinger 32 bei einem Aufsetzen auf eine Getränkedose 20 nicht zielgenau auf die jeweilige Getränkedose 20 treffen. Durch das Kugelgelenk 15 kann der Greifer 1 hierbei eine Ausgleichsbewegung durchführen.

Die vergrößerte und detaillierte Ansicht nach Fig. 6B lässt die einzelnen Details der Ausführungsform des Greifers 1 gut erkennen. Der Stößel 3 hat entsprechend den vorherig dargestellten Ausführungsformen die Greifmittel 6 aufgenommen und kann die Haken 8 mittels einer axialen Bewegung um den Drehpunkt 50 verschwenken.

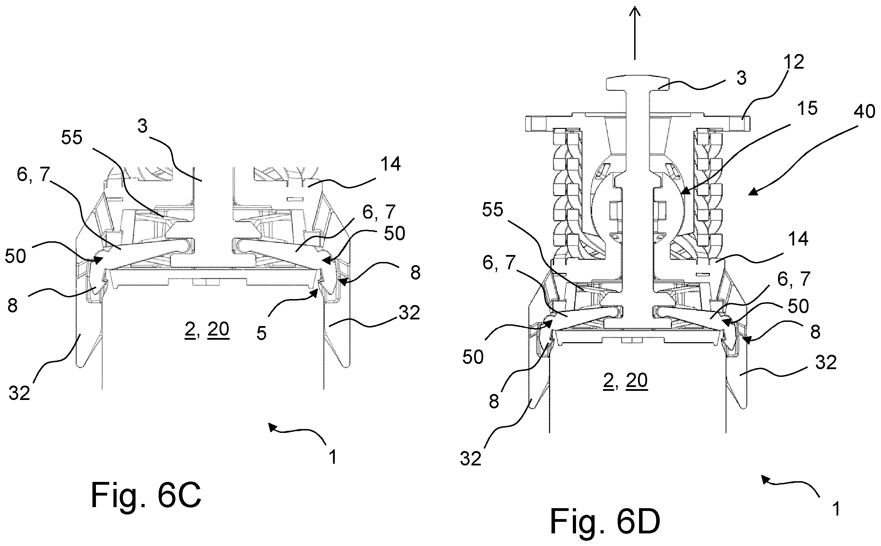

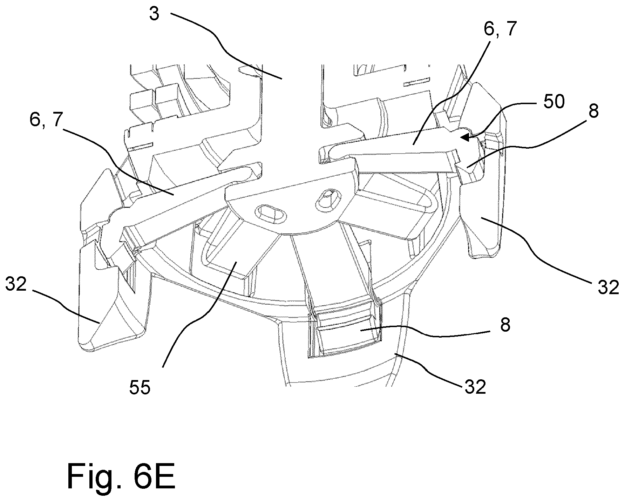

Ebenso besitzt die Ausführungsform eines Greifers 1 nach Figuren 6 eine Rückstellfeder 55, deren Funktion sich bei der Ausführungsform nach Fig. 6 jedoch von den vorherig dargestellten Ausführungsformen unterscheidet. Eine Zusammenschau der Fig. 6B mit Fig. 6C lässt zunächst erkennen, dass der Greifer 1 zur Entgegennahme einer Getränkedose 20 auf die jeweilige Getränkedose 20 aufgesetzt wird. Hierbei richten die Zentrierfinger 32 die Getränkedose 20 derart aus, dass die Greifmittel 6 nach vollständigem Ausrichten der Getränkedose 20 unter den Falz 5 (vgl. Fig. 6C) der Getränkedose 20 greifen können.

Die Verbindung zwischen dem Formteil 14 und der Basisplatte 12 über das Kugelgelenk 15 ist nun dergestalt, dass das Formteil 14 in axialer Richtung relativ zur Basisplatte 12 gegen eine Kraft der Feder 40 verschoben werden kann. Hierdurch lassen sich bei einer Entgegennahme der Getränkedose 20 zunächst Toleranzen in vertikaler Richtung ausgleichen, sofern die erwartete Höhe der Getränkedose 20 von einer erwarteten Soll-Höhe geringfügig abweicht. Das Formteil 14 kann gegenüber der Basisplatte 12 in vertikaler Richtung nachgeben. Während der Greifer 1 die Getränkedose 20 nach Entgegennahme anhebt, führt die Feder 40 das Formteil 14 in die Ausgangslage zurück.

In der Praxis wird der Greifer 1 in der Regel auf die Getränkedose 20 derart aufgesetzt, dass das Formteil 14 in axialer Richtung relativ zur Basisplatte 12 gegen die Kraft der Feder 40 bewegt wird. Sofern die Getränkedose 20 schief steht bzw. sofern sich die Getränkedose 20 nicht exakt an einer erwarteten Position oder nicht exakt in einer erwarteten Orientierung befindet, kann die Getränkedose 20 durch ein solches Überdrücken mittels der Zentrierfinger 32 ausgerichtet werden.

In der Darstellung der Fig. 6B ist der Greifer 1 noch oberhalb der Getränkedose 20 angeordnet, wohingegen der Greifer 1 in der Darstellung nach Fig. 6C bereits auf die Getränkedose 20 aufgesetzt ist. Nachdem der Greifer 1 entsprechend Fig. 6C auf die Getränkedose 20 aufgesetzt wurde, befindet sich der Haken 8 bereits im Falz 5 oder ist zumindest in einem Nahbereich des Falzes 5 angeordnet.

Die Getränkedose 20 wird jedoch in Fig. 6C noch nicht sicher über den Greifer 1 gehalten, da die Haken 8 noch nicht mit vorgegebener Klemmkraft gegen die Getränkedose 20 gedrückt sind. Die Rückholfeder 55 ist in Fig. 6C nicht gespannt oder bringt lediglich eine sehr geringe Federkraft auf die Greifmittel 6 auf. Die weitere Vorgehensweise zur Entgegennahme der Getränkedose 20 ergibt sich unter Berücksichtigung der schematischen Darstellung nach Fig. 6D.

Der Stößel 3 wird in axialer Richtung nach oben gezogen, wodurch die Haken 8 im Falz 5 kraftbeaufschlagt bzw. klemmend gegen die Getränkedose 20 drücken und die Getränkedose 20 am Greifer 1 festsetzen. Zugleich wird durch die axiale Bewegung des Stößels 3 die Rückstellfeder 55 gespannt und in einem gespannten Zustand gehalten. Ausgehend von der Darstellung nach Fig. 6D bzw. nach Entgegennahme der Getränkedose 20 kann der Greifer 1 die Getränkedose 20 an einen vorgegebenen Zielort bewegen.

Sofern die Getränkedose 20 am Zielort losgelassen werden soll, wird hierzu der Stößel 3 mittels der Rückstellkraft der Rückstellfeder 55 und aufgrund seiner Masse in die Ausgangslage axial zurückbewegt, wodurch die Getränkedose 20 über die Haken 8 nicht mehr fest am Greifer 1 gehalten wird. Das Loslassen einer Getränkedose 20 erfolgt somit ohne Zuhilfenahme eines Aktors und lediglich mittels der Rückstellraft der Rückstellfeder 55 und aufgrund eines Eigengewichts bzw. einer Masse des Stößels 3.

Die Fig. 6E zeigt eine schematische Schnittdarstellung von schräg unten auf den Greifer 1, nun ohne die Getränkedose 20. Die Darstellung der Fig. 6E verdeutlicht hierbei nochmals die konstruktive Ausgestaltung der Rückstellfeder 55 für die in Figuren 6A bis 6D beschriebene Ausführungsform. Die Rückstellfeder 55 besteht aus mehreren bzw. vorliegend vier V-förmigen Flügeln, die an einem jeweiligen Ende fest mit dem Stößel 3 verbunden sind.

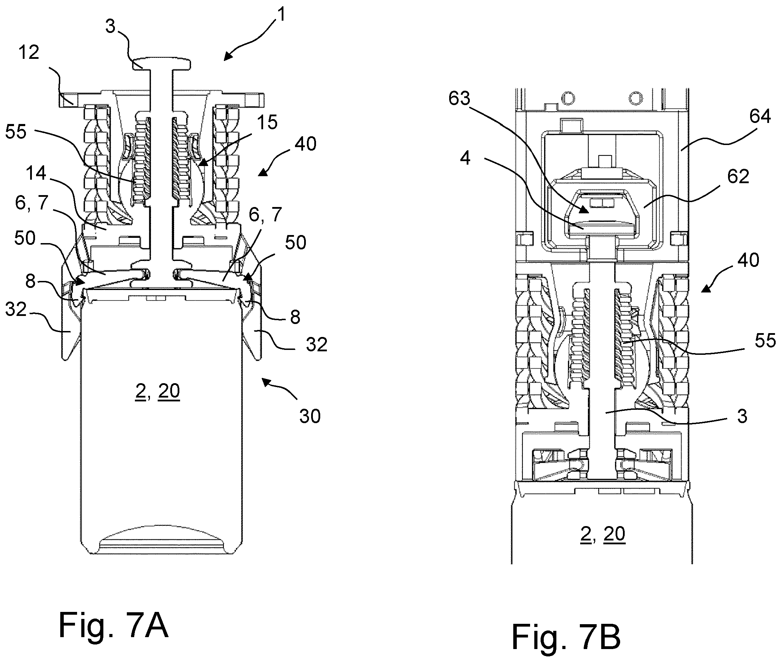

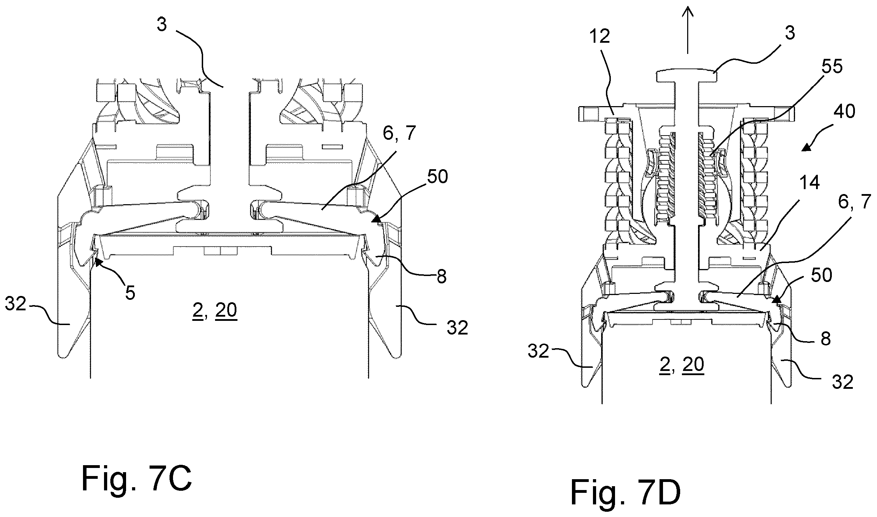

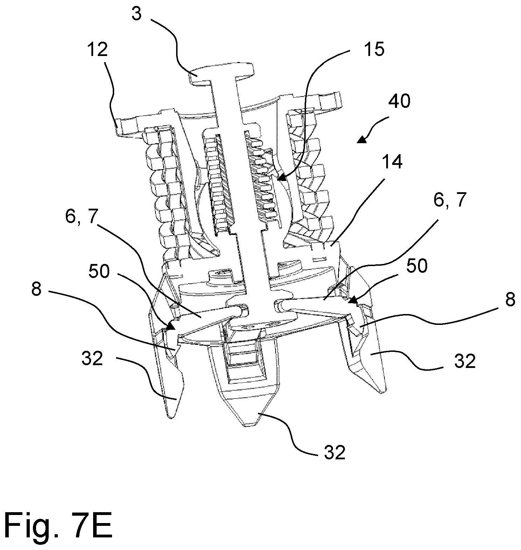

Die Figuren 7A bis 7E zeigen schematische Darstellungen einer weiteren Ausführungsform eines erfindungsgemäßen Greifers 1. Entsprechend der vorherig zu den Figuren 1 bis 6 beschriebenen Ausführungsformen umfasst auch die Ausführungsform eines Greifers 1 nach Fig. 7 einen Stößel 3, eine Befestigungsplatte 12, ein Formteil 14, mindestens eine Feder 40, mehrere Greifmittel 6 bzw. Hebel 7 sowie eine Zentrierung 30 mit mehreren Zentrierfingern 32, welche ein Getränkedose 20 bedarfsweise ausrichten und während einer Handhabung stabilisieren können.

In der Darstellung der Fig. 7A ist die Getränkedose weiterhin mit der Bezugsziffer 20 bezeichnet. Die Feder 40 ist außenliegend bzw. von außen zugänglich und beaufschlagt das Formteil 14 gegenüber der Befestigungsplatte 12 mit einer Rückstellkraft, sofern das Formteil 14 und die Befestigungsplatte 12 relativ zueinander verschwenkt werden oder relativ zueinander in axialer Richtung bewegt werden. Ein solches Verschwenken kann dann erfolgen, wenn die Zentrierfinger 32 bei einem Aufsetzen auf eine Getränkedose 20 nicht zielgenau auf die jeweilige Getränkedose 20 treffen. Durch das Kugelgelenk 15 kann der Greifer 1 hierbei eine Ausgleichsbewegung durchführen.

Von der Ausführungsform eines Greifers 1 nach Figuren 6A bis 6E unterscheidet sich die Ausführungsform eines Greifers 1 nach Figuren 7A bis 7E durch die konstruktive Ausbildung der Rückstellfeder 55. Die Rückstellfeder 55 der Ausführungsform nach Fig. 7A ff. ist entsprechend der Ausführungsform nach Fig. 6A ff. dafür vorgesehen, den Stößel 3 unter Federkraft in eine Ausgangslage zurückzubewegen, sofern eine Getränkedose 20 vom Greifer 1 losgelassen werden soll.

Die Ausführungsform einer Rückstellfeder 55 nach Figuren 7A bis 7E ist im Bereich des Kugelgelenks 15 positioniert. Der Stößel 3 erstreckt sich durch die Rückstellfeder 55 hindurch. Weiter ist die Rückstellfeder 55 fest mit der Basisplatte 12 des Greifers 1 verbunden. Eine solche Ausgestaltung einer Rückstellfeder 55, wie es in der Ausführungsform nach Figuren 7A bis 7E gezeigt ist, zeichnet sich durch eine hohe Dauerfestigkeit aus.

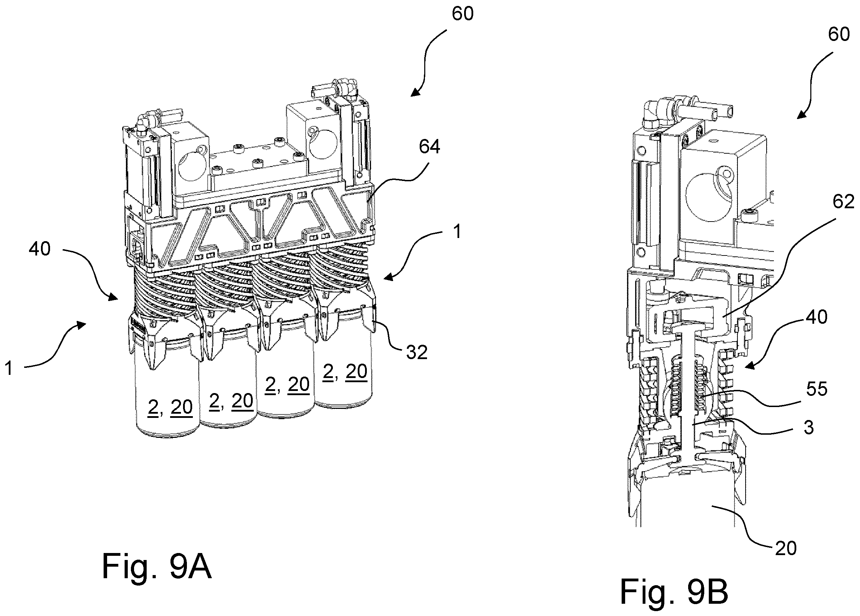

Die detaillierte schematische Darstellung nach Fig. 7B lässt zusätzlich zu dem Greifer 1 nach Fig. 7A einen Mechanismus erkennen, über welchen der Stößel 3 zur Entgegennahme einer Getränkedose 20 betätigt werden kann. Der Mechanismus ist Bestandteil der gesamten Greifeinrichtung 60, wie sie in der schematischen Perspektivansicht nach Fig. 9A zu erkennen ist.

Wie es die Fig. 7B zeigt, bildet der Stößel 3 an seinem in Richtung nach oben weisenden Ende einen Kopf 4 aus, der eine pilzförmige Formgebung besitzt. Ein Betätigungsmittel 62 untergreift den Kopf 4, so dass das Betätigungsmittel 62 in Richtung nach oben bewegt werden kann und hierdurch den Stößel 3 in Richtung nach oben mit sich zieht. Hierdurch können, wie vorhergehend beschrieben, die Haken 8 im Bereich des Falzes 5 kraftbeaufschlagt mit der Getränkedose 20 in Anlage gebracht werden.

Sofern eine jeweilige Getränkedose 20 freigegeben werden soll, wird das Betätigungsmittel 62 in die Ausgangslage nach 7B in Richtung nach unten zurückbewegt. Der Stößel 3 folgt hierbei der Bewegung des Betätigungsmittels 62 und wird aufgrund der Rückstellkraft der Rückstellfeder 55 und aufgrund seiner Masse bzw. seines Eigengewichts in Richtung nach unten bewegt.

Der Längsschnitt der Fig. 7B zeigt zudem, dass das Betätigungsmittel 62 in einem Gehäuse 64 aufgenommen ist, welches einerseits das Betätigungsmittel 62 in axialer Richtung führt und zudem einen unbeabsichtigten Zugriff durch einen Benutzer von außen unterbindet. Fig. 7B verdeutlicht auch, dass das Betätigungsmittel 62 einen Freiraum 63 besitzt, in welchem der Kopf 4 des Stößels 3 aufgenommen ist. Innerhalb dieses Freiraums 63 kann der Kopf 4 in axialer Richtung relativ zum Betätigungsmittel 62 angehoben werden. Sofern der Greifer 1 bei Aufsetzen auf eine Getränkedose 20 nicht zielgenau auf die jeweilige Getränkedose 20 trifft, kann der Stößel 3 etwas in Richtung nach oben ausweichen, womit einer Beschädigung der jeweiligen Getränkedose 20 entgegengewirkt wird.

Auch ist in der Praxis weiterhin vorgesehen, dass der Greifer 1 auf die Getränkedose 20 aufgesetzt wird und nachfolgend weiter in Richtung der Getränkedose 20 bewegt wird bzw. nachfolgend weiter auf die Getränkedose 20 gedrückt wird, bis sich das Formteil 14 und die Basisplatte 12 einander nähern. Eine solche Relativbewegung zwischen Formteil 14 und Basisplatte 12 kann ggf. 2 Millimeter betragen. Sofern eine Getränkedose 20 sich nicht an einer Soll-Position befindet oder eine Orientierung besitzt, die von einer Soll-Orientierung abweicht, kann die Getränkedose 20 durch ein solches Überdrücken ausgerichtet werden. Auch hierbei kann der Stößel im Freiraum 63 ausweichen, so dass eine mit dem Überdrücken einhergehende Beschädigung der Getränkedose 20 in der Praxis nicht vorkommt.

Die Figuren 7C und 7D verdeutlichen nochmals in einer Zusammenschau zwei aufeinanderfolgende Schritte, wie sie bei einer Entgegennahme einer Getränkedose 20 mittels der Ausführungsform eines Greifers 1 nach Figuren 7 durchgeführt werden.

In Fig. 7C ist der Greifer 1 bereits auf die Getränkedose 20 aufgesetzt. Die Haken 8 befinden sich bereits im Bereich des Falzes 5, sind jedoch noch nicht kraftbeaufschlagt mit der Getränkedose 20 in Anlage gebracht.

In Fig. 7D wird der Stößel 3 in Richtung nach oben gezogen, wodurch die Haken 8 kraftbeaufschlagt mit der Getränkedose 20 in Anlage treten und wodurch gleichzeitig die Rückstellfeder 55 gespannt wird. Sofern die Getränkedose 20 vom Greifer 1 gelöst werden soll, wird der Stößel 3 mittels der Rückstellkraft der Rückstellfeder 55 in seine Ausgangslage zurückbewegt.

Die Fig. 7E zeigt eine schematische Schnittdarstellung durch den Greifer 1 und zeigt hierbei insbesondere nochmals die Ausgestaltung der als Bestandteil des Greifers 1 ausgebildeten Ausführungsform einer Rückstellfeder 55. Die Rückstellfeder 55 ist im Bereich des Kugelgelenks 15 positioniert. Zudem ist die Rückstellfeder 55 um den Stößel 3 geführt bzw. nimmt den Stößel 3 auf. Der Stößel 3 bildet an seinem oberen Ende einen Kopf 4 aus, der eine pilzförmige Formgebung besitzt und somit von einem Betätigungsmittel 62 entsprechend Fig. 7B untergriffen werden kann.

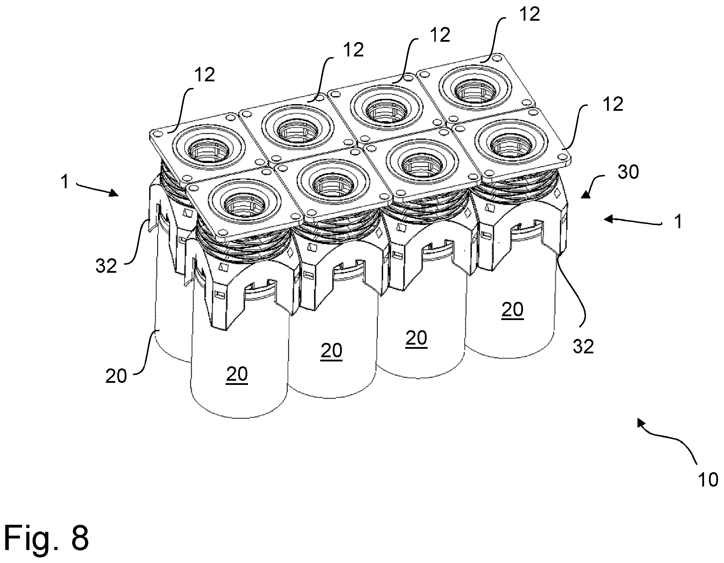

Die Fig. 8 zeigt eine schematische Perspektivansicht einer Ausführungsform eines erfindungsgemäßen Greifkopfes 10. Der Greifkopf 10 umfasst eine Vielzahl an Greifern 1, welche gemäß dem Ausführungsbeispiel nach Figuren 1 bis 3 und/oder gemäß dem Ausführungsbeispiel nach Figuren 4 und 5 ausgebildet sein können.

Die Getränkedosen 20, welche in Fig. 8 mittels des Greifkopfes 10 entgegengenommen werden und in Fig. 10 nochmals dargestellt werden, sind als sog. Slimline-Dosen ausgebildet und zeichnen sich dadurch aus, dass ein Querschnittsdurchmesser der Getränkedose 20 nahezu über ihre gesamte Höhe identisch ausgebildet ist. Lediglich im Bereich des Falzes 5 besitzt eine solche Getränkedose 20 eine Einschnürung. Ein oberer Randbereich und die Außenmantelfläche 2 der Getränkedose 20 besitzen einen identischen oder nahezu identischen Querschnittsdurchmesser.

Bei einer Entgegennahme einer Gruppe an solchen Getränkedosen 20 stehen benachbarte Getränkedosen 20 über ihre Außenmantelflächen 2 miteinander in Anlage. Aus dem Stand der Technik bekannte Greifköpfe nehmen solche Gruppen an Getränkedosen 20 pneumatisch entgegen, wozu zwischen einem Deckel einer jeweiligen Getränkedose und dem Greifkopf jeweils ein Unterdruck hergestellt wird. Die Getränkedose 20 tauchen hierbei in einen jeweiligen Saugkopf eines solchen Greifkopfes ein.

Aufgrund der Geometrie einer Slimline-Dose, wie sie beispielhaft in Fig. 10 dargestellt ist, kann ein solcher Greifkopf mehrere aneinander stehende Getränkedosen 20 nicht oder nur mit Problemen pneumatisch entgegennehmen, da die Getränkedosen 20 aufgrund ihrer Geometrie vom Bodenbereich bis zum Deckel sehr nah aneinander heranreichen. Es ist bei aus dem Stand der Technik bekannten Greifköpfen nicht möglich, dass aneinander anstehende Slimline-Dosen in den jeweiligen Saugkopf eingetaucht werden, damit ein Greifer diese Getränkedosen hierdurch pneumatisch erfassen kann.

Es besteht weiterhin ein Nachteil, da sich eine jeweilige Getränkedose 20 von einem Saugkopf ungewollt lösen kann, da der Deckel auch aufgrund des hierin angeordneten Verschlusses keine ebene Oberfläche besitzt. Eine mechanische Entgegennahme mehrerer solcher Getränkedosen 20 durch klemmende Anlage von Greifelementen an Außenmantelflächen 2 ist mit aus dem Stand der Technik bekannten Greifköpfen ebenso nicht möglich, da die Getränkedosen 20 aufgrund ihrer Geometrie nahezu über ihre gesamte Längserstreckung miteinander in Anlage stehen und die Außenmantelflächen 2 daher teilweise über ihre gesamte Längserstreckung nicht zugänglich sind.

Der Greifkopf 10 nach Fig. 8 kann mehrere solche Getränkedosen 20 entgegennehmen und nach einer Entgegennahme sicher transportieren. Die Fig. 8 lässt hierbei erkennen, dass die Zentrierfinger 32 jeweils derart positioniert sind, dass die Zentrierfinger 32 mit einer Außenmantelfläche 2 der jeweiligen Getränkedose 20 in einem bestimmten Bereich in Oberflächenkontakt stehen, welcher bestimmte Bereich gegenüber einem Kontaktbereich, bei welchem die jeweilige Getränkedose 20 an einer benachbarten Getränkedose 20 ansteht, entlang des Umfangsverlaufs der jeweiligen Getränkedose 20 versetzt ist. Durch eine solche Positionierung der Zentrierfinger 32 können sämtliche Getränkedosen 20 einer jeweiligen Gruppe bei Aufsetzen des Greifers 1 auf die Getränkedosen 20 mittels der Zentrierfinger 32 ausgerichtet werden.

Während einer weiteren Bewegung des Greifers 1 in Richtung der Getränkedosen 20 werden die Getränkedosen 20 mittels mehrerer Greifmittel 6, wie vorhergehend zu den Figuren 1 bis 5 bereits beschrieben, im Bereich ihres jeweiligen oberen Falzes 5 formschlüssig untergriffen. Der Greifkopf 10 eignet sich daher insbesondere zur Entgegennahme mehrere Getränkedosen 20, die miteinander in Anlage stehen und durch Slimline-Dosen ausgebildet sind.

Die verschiedenen Ansichten der Figuren 9A bis 9D zeigen eine beispielhafte Ausführungsform einer Greifeinrichtung 60, welche zeitgleich mehrere Getränkedosen 20 entgegennehmen kann. Für jede entgegenzunehmende Getränkedose 20 besitzt die Greifeinrichtung 60 einen eigenen Greifer 1. Vorliegend kann die Greifeinrichtung 60 zeitgleich vier Getränkedosen 20 erfassen, wozu die Greifeinrichtung 60 vier Greifer 1 besitzt. Die Greifer 1 sind bei der Greifeinrichtung 60 nach Figuren 9A bis 9D jeweils entsprechend dem vorherig beschriebenen Ausführungsbeispiel nach Figuren 7A bis 7E ausgebildet.

Die Fig. 9A lässt nochmals die Feder 40 bzw. die außenliegende Feder 40 erkennen, welche für einen entsprechenden Toleranzausgleich sorgt, sofern ein jeweiliger Greifer 1 nicht zielgenau auf die jeweilige Getränkedose 20 aufsetzt. Mit Bezugsziffer 64 ist in Fig. 9A weiterhin das bereits in Fig. 7B dargestellte Gehäuse gezeigt, in welchem die für eine axiale Bewegung eines jeweiligen Stößels 3 vorgesehenen Betätigungsmittel 62 angeordnet sind.

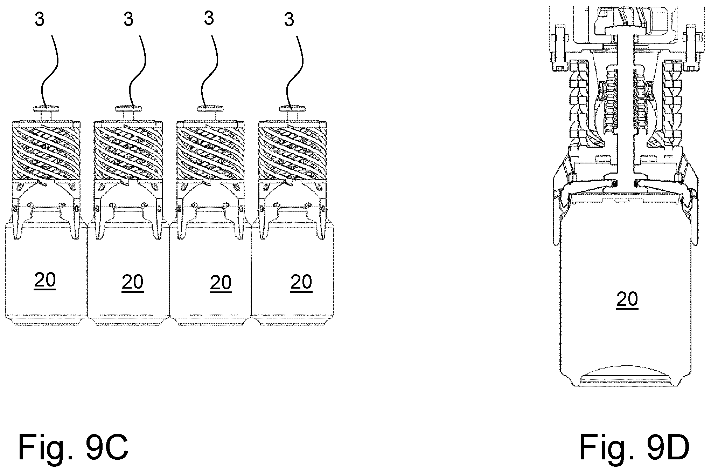

Jeder Greifer 1 umfasst vier Zentrierfinger 32, welche zum Ausrichten einer jeweiligen Getränkedose 20 mit einer Außenmantelfläche 2 der jeweiligen Getränkedose 20 in Anlage gebracht werden. Eine Greifeinrichtung 60 entsprechend dem Ausführungsbeispiel nach Figuren 9 kann beispielsweise an einem Portalsystem befestigt sein, welches die Greifeinrichtung 60 oberhalb der Getränkebehälter führt.

Die Fig. 9B zeigt nochmals das Betätigungsmittel 62, welches den Stößel 3 in Richtung nach oben ziehen kann und hierdurch die Haken 8 kraftbeaufschlagt bzw. klemmend gegen die Getränkedose 20 drückt. Auch ist nochmals die Rückstellfeder 55 dargestellt, welche den Stößel 3 zum Freigeben der Getränkedose 20 in die Ausgangslage zurückbewegen kann.

Die Greifer 1 aus den Figuren 9C und 9D sind mit den Greifern 1 aus den Figuren 9A und 9B identisch bzw. betreffen ein Ausführungsbeispiel. Aus einer Zusammenschau dieser Figuren 9A und 9B mit 9C und 9D wird deutlich, dass sich die Greifer 1 zum Entgegennehmen von sogenannten Slim-Line-Dosen eignen, wie sie beispielhaft in Fig. 10 dargestellt sind.

Entsprechend Figuren 9C und 9D können mittels dieser Greifer 1 auch weitere Getränkedosen 20 entgegengenommen werden, die sich im Hinblick auf ihre Geometrie von solchen Slim-Line-Dosen nach Fig. 10 unterscheiden. So eignet sich ein solcher Greifer 1 auch zum Entgegennehmen von Getränkedosen 20, welche durch herkömmliche Getränkedosen bzw. Standard-Dosen, durch Konservendosen oder durch Getränkedosen 20 ausgebildet sind, welche einen mehreckigen Querschnitt besitzen.

Die Fig. 10 zeigt eine schematische Ansicht einer Getränkedose 20, wie sie mittels der Ausführungsformen eines Greifers 1 bzw. eines Greifkopfes 10 und einer Greifeinrichtung 60 nach Figuren 1 bis 9 jeweils entgegengenommen werden kann. Die Getränkedose 20 ist als Slimline-Dose ausgebildet, wobei ein Querschnittsdurchmesser der Getränkedose 20 nahezu über ihre gesamte Höhe konstant ausgebildet ist. Lediglich im Bereich des Deckels bzw. Verschlusses bildet die Getränkedose 20 einen oberen Falz 5 aus, über welchen ein Greifer 1 bzw. Greifkopf 10 bzw. eine Greifeinrichtung 60 gemäß den vorherigen Ausführungsbeispielen nach Figuren 1 bis 9 die Getränkedose 20 formschlüssig untergreifen kann.

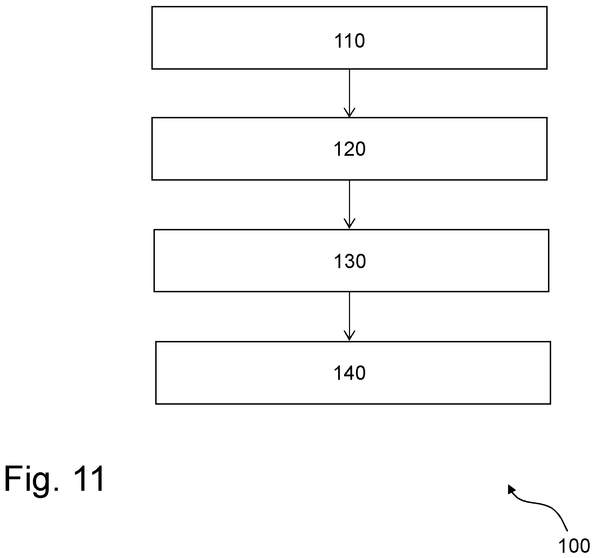

Die Fig. 11 zeigt im Flussdiagramm einzelne Schritte, wie sie bei diversen Ausführungsformen des erfindungsgemäßen Verfahrens 100 vorgesehen sein können. Im ersten Verfahrensschritt 110 wird ein Greifer 1 in Richtung einer Getränkedose 20 abgesenkt, wobei die jeweilige Getränkedose 20 über eine als Bestandteil des Greifers 1 ausgebildete Zentrierung 30 in eine definierte Ausrichtung gebracht wird, in welcher definierten Ausrichtung mehrere als Bestandteil des Greifers 1 ausgebildete Greifmittel 6 die Getränkedose 20 im Bereich eines oberen Falzes 5 formschlüssig untergreifen können. Um die Getränkedose 20 in die definierte Ausrichtung zu bringen, treten mehrere als Bestandteil der Zentrierung 30 ausgebildete Zentrierfinger 32 mit einer Außenmantelfläche 2 der Getränkedose 20 in Kontakt und schieben die jeweilige Getränkedose 20 hierbei in die definierte Ausrichtung.

Im zweiten Schritt 120 wird der Greifer 1 weiter in Richtung der Getränkedose 20 abgesenkt. Hierdurch wird die jeweilige Getränkedose 20 im Bereich ihres oberen Falzes 5 formschlüssig untergriffen, wozu ein Haken 8 des Greifers 1 in den oberen Falz 5 der Getränkedose 20 schnappt.

Im darauffolgenden dritten Schritt 130 wird die über den Greifer 1 entgegengenommene Getränkedose 20 in Richtung einer weiteren Handhabung transportiert.

Zeitlich hierauf folgend wird der vierte Schritt 140 durchgeführt, bei welchem die Haken 8 aus dem oberen Falz 5 der Getränkedose 20 bewegt werden und die Getränkedose 20 hierdurch nicht mehr vom Greifer 1 erfasst ist bzw. freigegeben ist. Der Greifer 1 kann sodann zur Entgegennahme einer weiteren Getränkedose 20 in Richtung der weiteren Getränkedose 20 bewegt werden.

Wenn auch im Zusammenhang der vorstehenden Figurenbeschreibung generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen oder anderer gezeichneter Elemente in irgendeiner Weise in seinem Verständnis beeinträchtigt wäre.

### Bezugszeichenliste

1 Greifer
2 Außenmantelfläche
3 Stößel
4 Kopf
5 Falz
6 Greifmittel
7 Hebel
8 Haken
9 Einlegeteil
10 Greifkopf
12 Befestigungsplatte
14 Formteil
15 Kugelgelenk
17 Drehstabfeder
20 Getränkedose
22 Gewinde
24 Gegengewinde
30 Zentrierung
32 Zentrierfinger
40 Feder
42 Blattfeder
50 Drehpunkt
55 Rückstellfeder
60 Greifeinrichtung
62 Betätigungsmittel
64 Gehäuse
100 Verfahren
110 erster Verfahrensschritt
120 zweiter Verfahrensschritt
130 dritter Verfahrensschritt
140 vierter Verfahrensschritt

## Patentansprüche

1. Greifkopf (10) für mehrere Getränkedosen (20), welche mehreren Getränkedosen (20) aneinander anstehen, umfassend
- mindestens zwei Greifer (1) für Getränkedosen, wobei ein jeweiliger Greifer (1) zum Greifen einer jeweiligen Getränkedose (20) der mehreren Getränkedosen (20) ausgebildet ist und wobei die mindestens zwei Greifer (1)
- mindestens ein Greifmittel (6) zum formschlüssigen Untergreifen einer jeweiligen Getränkedose (20) im Bereich eines oberen Falzes (5), welchen oberen Falz (5) eine jeweilige Getränkedose (20) ausbildet, umfassen und
- wenigstens eine Zentrierung (30) umfassen, über welche wenigstens eine Zentrierung (30) die jeweilige Getränkedose (20) in eine definierte Ausrichtung bringbar ist, in welcher definierten Ausrichtung das mindestens eine Greifmittel (6) eine jeweilige Getränkedose (20) im Bereich ihres oberen Falzes (5) formschlüssig untergreifen kann, wobei
- die wenigstens eine Zentrierung (30) des jeweiligen Greifers (1) derart positioniert ist, dass die wenigstens eine Zentrierung (30) bei einer Entgegennahme einer jeweiligen Getränkedose (20) mit einer Außenmantelfläche der jeweiligen Getränkedose (20) in wenigstens einem definierten Bereich in Oberflächenkontakt gelangt, **dadurch gekennzeichnet, dass**
der wenigstens eine definierte Bereich gegenüber mindestens einem Kontaktbereich, bei welchem die Getränkedose (20) an mindestens einer weiteren Getränkedose (20) ansteht, entlang des Umfangsverlaufs der jeweiligen Getränkedose (20) versetzt positioniert ist.

2. Greifkopf (10) nach Anspruch 1, wobei die mindestens zwei Greifer (1) wenigstens einen Stößel (3) umfassen, welcher wenigstens eine Stößel (3) mit dem mindestens einen Greifmittel (6) derart zusammenwirkt, dass ein jeweiliger formschlüssiger Untergriff des mindestens einen Greifmittels (6) im Bereich des oberen Falzes (5) mittels einer linearen Betätigungsbewegung des wenigstens einen Stößels (3) aufgehoben werden kann und/oder welcher wenigstens eine Stößel (3) mit dem mindestens einen Greifmittel (6) derart zusammenwirkt, dass das mindestens eine Greifmittel (6) zum Halten einer jeweiligen Getränkedose (20) im Bereich des jeweiligen oberen Falzes (5) mittels einer linearen Betätigungsbewegung des wenigstens einen Stößels (3) eine Klemmkraft auf die jeweilige Getränkedose (20) aufbringen kann.

3. Greifkopf (10) nach Anspruch 1 oder Anspruch 2, wobei die mindestens zwei Greifer (1) mehrere Greifmittel (6) umfassen, welchen mehreren Greifmitteln (6) ein gemeinsamer Stößel (3) zugeordnet ist, wobei der gemeinsame Stößel (3) mit den mehreren Greifmitteln (6) derart zusammenwirkt, dass ein jeweiliger formschlüssiger Untergriff der mehreren Greifmittel (6) im Bereich des oberen Falzes (5) mittels einer linearen Betätigungsbewegung des gemeinsamen Stößels (3) aufgehoben werden kann und/oder dass die mehreren Greifmittel (6) zum Halten der jeweiligen Getränkedose (20) im Bereich des jeweiligen oberen Falzes (5) mittels einer linearen Betätigungsbewegung des gemeinsamen Stößels (3) eine jeweilige Klemmkraft auf die jeweilige Getränkedose (20) aufbringen können.

4. Greifkopf (10) nach Anspruch 2 oder Anspruch 3, bei welchem
- der wenigstens eine Stößel (3) oder der gemeinsame Stößel (3) ein Gewinde (22) ausbildet, welches mit einem korrespondierenden Gegengewinde (24) des Greifers (1) in Verbindung steht, so dass der wenigstens eine Stößel (3) oder der gemeinsame Stößel (3) durch eine vorzugsweise um seine Längsachse verlaufende Drehbewegung eine jeweilige lineare Betätigungsbewegung ausführen kann und/oder bei welchem
- der wenigstens eine Stößel (3) oder der gemeinsame Stößel (3) zum Ausführen einer jeweiligen linearen Betätigungsbewegung pneumatisch ansteuerbar ist.

5. Greifkopf (10) nach einem der Ansprüche 1 bis 4, wobei die mindestens zwei Greifer (1) mindestens eine Rückstellfeder (55) umfassen, welche mindestens eine Rückstellfeder (55)
- den Stößel (3) oder den gemeinsamen Stößel (3) nach der durchgeführten linearen Betätigungsbewegung zum Rückführen in eine Ausgangsposition mit Federkraft beaufschlagen kann, und/oder welche mindestens eine Rückstellfeder (55)
- das mindestens eine Greifmittel (6) kraftbeaufschlagt im Bereich des oberen Falzes (5) gegen die jeweilige Getränkedose (20) drücken kann.

6. Greifkopf (10) nach einem der Ansprüche 1 bis 5, bei welchem das mindestens eine Greifmittel (6) zum formschlüssigen Untergreifen der Getränkedose (20) im Bereich des oberen Falzes (5) mindestens ein als Haken (8) ausgebildetes Einlegeteil (9) umfasst, welches als Haken (8) ausgebildetes Einlegeteil (9) als austauschbarer Bestandteil des mindestens einen Greifmittels (6) ausgebildet ist.

7. Greifkopf (10) nach einem der Ansprüche 1 bis 6, bei dem die mindestens zwei Greifer (1) wenigstens eine Drehstabfeder (17) umfassen, mit welcher wenigstens einen Drehstabfeder (17) das mindestens eine Greifmittel (6) in Verbindung steht, wobei das mindestens eine Greifmittel (6) bei einem formschlüssigen Untergreifen einer jeweiligen Getränkedose (20) über die wenigstens eine Drehstabfeder (17) in ihrer Position gehalten wird und wobei der formschlüssige Untergriff des mindestens einen Greifmittels (6) durch federelastische Bewegung des mindestens einen Greifmittels (6) gegen die Federkraft der wenigstens einen Drehstabfeder (17) aufhebbar ist.

8. Greifkopf (10) nach einem der Ansprüche 1 bis 7, bei dem die mindestens zwei Greifer (1) ein Kugelgelenk (15) umfassen, über welches Kugelgelenk (15) das mindestens eine Greifmittel (6) und/oder die wenigstens eine Zentrierung (30) und/oder der wenigstens eine Stößel (3) bzw. der gemeinsame Stößel (3) schwenkbeweglich gelagert sind.

9. Greifkopf (10) nach Anspruch 8, wobei die mindestens zwei Greifer (1) wenigstens eine Feder (40) umfassen, welche vorzugsweise durch mehrere Blattfedern (42) ausgebildet ist und über welche wenigstens eine Feder (40) eine Rückstellkraft für das mindestens eine Greifmittel (6) und/oder für die wenigstens eine Zentrierung (30) und/oder für den wenigstens einen Stößel (3) bzw. den gemeinsamen Stößel (3) bei einer Schwenkbewegung des Kugelgelenks (15) bereitgestellt wird.

10. Greifkopf (10) nach einem der Ansprüche 1 bis 9, wobei ein jeweiliger Greifer (1) der mindestens zwei Greifer (1) eine jeweilige Befestigungsplatte (12) ausbildet, wobei die Befestigungsplatten (12) der mindestens zwei Greifer (1) bündig aneinander anliegen.

11. Verfahren (100) zum Entgegennehmen wenigstens einer Getränkedose (20) über wenigstens einen Greifer (1) eines Greifkopfes (10) nach einem der Ansprüche 1 bis 10, bei welchem Verfahren
- mindestens ein als Bestandteil des wenigstens einen Greifers (1) ausgebildetes Greifmittel (6) die wenigstens eine Getränkedose (20) zur Entgegennahme im Bereich eines jeweiligen oberen Falzes (5), welcher jeweilige obere Falz (5) von der jeweiligen Getränkedose (20) ausgebildet wird, formschlüssig untergreift, das Verfahren **dadurch gekennzeichnet, dass**
die wenigstens eine Getränkedose (20) über wenigstens eine als Bestandteil des wenigstens einen Greifers (1) ausgebildete Zentrierung (30) in eine definierte Ausrichtung gebracht wird, in welcher definierten Ausrichtung das mindestens eine Greifmittel (6) des wenigstens einen Greifers (1) eine jeweilige Getränkedose (20) im Bereich des jeweiligen oberen Falzes (5) formschlüssig untergreifen kann.

12. Verfahren nach Anspruch 11, bei welchem der wenigstens eine Greifer (1) wenigstens einen Stößel (3) besitzt, wobei der wenigstens eine Stößel (3) eine lineare Betätigungsbewegung ausführt, woraus resultierend der formschlüssige Untergriff des mindestens einen Greifmittels (6) aufgehoben wird und/oder woraus resultierend eine bis dahin zum Halten der jeweiligen Getränkedose (20) über das mindestens eine Greifmittel (6) auf die jeweilige Getränkedose (20) aufgebrachte Klemmkraft aufgehoben wird.

13. Verfahren nach Anspruch 11 oder Anspruch 12, bei welchem ein Greifer (1) oder mehrere Greifer (1) jeweils mehrere Greifmittel (6) besitzen, welchen mehreren Greifmitteln (6) ein gemeinsamer Stößel (3) des jeweiligen Greifers (1) zugeordnet ist, wobei der gemeinsame Stößel (3) eine lineare Betätigungsbewegung ausführt, woraus resultierend zeitgleich oder zumindest näherungsweise zeitgleich die formschlüssigen Untergriffe der mehreren Greifmittel (6) aufgehoben werden und/oder woraus resultierend zeitgleich oder zumindest näherungsweise zeitgleich bis dahin zum Halten der jeweiligen Getränkedose (20) über die mehreren Greifmittel (6) auf die jeweilige Getränkedose (20) aufgebrachte Klemmkräfte aufgehoben werden.

14. Verfahren nach Anspruch 12 oder Anspruch 13, bei welchem
- der wenigstens eine Stößel (3) oder der gemeinsame Stößel (3) ein Gewinde (22) ausbildet, welches mit einem korrespondierenden Gegengewinde (24) des jeweiligen Greifers (1) verbunden ist und wobei der wenigstens eine Stößel (3) oder der gemeinsame Stößel (3) vorzugsweise um seine Längsachse gedreht wird und hierdurch eine jeweilige lineare Betätigungsbewegung ausführt und/oder bei welchem Verfahren
- der wenigstens eine Stößel (3) zum Ausführen der linearen Betätigungsbewegung pneumatisch angesteuert wird.

15. Verfahren nach einem der Ansprüche 11 bis 14, bei welchem der wenigstens eine Greifer (1) wenigstens eine Drehstabfeder (17) besitzt, mit welcher wenigstens einen Drehstabfeder (17) das mindestens eine Greifmittel (6) in Verbindung steht, wobei das mindestens eine Greifmittel (6) bei einer Entgegennahme einejeweiligen Getränkedose (20) unter den oberen Falz (5) einer jeweiligen Getränkedose (20) schnappt und wobei der formschlüssige Untergriff des mindestens einen Greifmittels (6) hierauf folgend durch eine federelastische Bewegung des mindestens einen Greifmittels (6) gegen eine Federkraft der wenigstens einen Drehstabfeder (17) aufgehoben wird.

16. Verfahren nach einem der Ansprüche 11 bis 15, bei welchem der wenigstens eine Greifer (1) ein Kugelgelenk (15) besitzt, mittels welchen Kugelgelenkes (15) das jeweilige mindestens eine Greifmittel (6) und/oder die jeweilige wenigstens eine Zentrierung (30) und/oder der jeweilige wenigstens eine Stößel (3) bzw. der jeweilige gemeinsame Stößel (3) bedarfsweise schwenkt, sofern eine Ist-Position einer jeweiligen Getränkedose (20) bei einer Entgegennahme über den jeweiligen wenigstens einen Greifer (1) von einer erwarteten Soll-Position einer jeweiligen Getränkedose (20) abweicht.

17. Verfahren nach Anspruch 16, bei welchem der wenigstens eine Greifer (1) wenigstens eine Feder (40) umfasst, welche wenigstens eine Feder (40) vorzugsweise durch mehrere Blattfedern (42) ausgebildet ist und welche wenigstens eine Feder (40) das jeweilige mindestens eine Greifmittel (6) und/oder die jeweilige wenigstens eine Zentrierung (30) und/oder den jeweiligen wenigstens einen Stößel (3) bzw. den jeweiligen gemeinsamen Stößel (3) bei einer durchgeführten Schwenkbewegung nach Entgegennahme der jeweiligen wenigstens einen Getränkedose (20) in eine Ausgangslage mit Federkraft zurückschwenkt.

## Claims

1. A gripper head (10) for a plurality of beverage cans (20), which plurality of beverage cans (20) stand contiguous to each other, the gripper head (10) comprising
- at least two grippers (1) for beverage cans, wherein a particular gripper (1) is designed to grip a particular beverage can (20) from the plurality of beverage cans (20), and wherein the at least two grippers (1)
- comprise at least one gripping means (6) to grip a particular beverage can (20) from underneath in a form-fitting manner in the region of a top seam (5), which top seam (5) is formed by a particular beverage can (20), and
- comprise at least one centring device (30), via which at least one centring device (30) the particular beverage can (20) is bringable into a defined alignment, in which defined alignment the at least one gripping means (6) is able to grip a particular beverage can (20) from underneath in a form-fitting manner in the region of its top seam (5), wherein
- the at least one centring device (30) of the particular gripper (1) is positioned such that the at least one centring device (30) comes into surface contact with an outer body surface in at least one defined region of a particular beverage can (20) when receiving the particular beverage can (20), **characterised in that** the at least one defined region is positioned offset along the circumference of the particular beverage can (20) relative to at least one contact region in which the beverage can (20) is contiguous to at least one other beverage can (20).

2. The gripper head (10) according to claim 1, wherein the at least two grippers (1) comprise at least one tappet (3), which at least one tappet (3) interacts with the at least one gripping means (6) such that it is possible for a particular form-fitting grip from underneath in the region of the top seam (5) by the at least one gripping means (6) to be undone by a linear actuating movement of the at least one tappet (3), and/or which at least one tappet (3) interacts with the at least one gripping means (6) such that the at least one gripping means (6) is able to apply a clamping force to a particular beverage can (20) by a linear actuating movement of the at least one tappet (3) in order to hold the particular beverage can (20) in the region of the particular top seam (5).

3. The gripper head (10) according to claim 1 or claim 2, wherein the at least two grippers (1) comprise a plurality of gripping means (6), with a common tappet (3) being assigned to the plurality of gripping means (6), wherein the common tappet (3) interacts with the plurality of gripping means (6) such that it is possible for a particular form-fitting grip from underneath in the region of the top seam (5) by the plurality of gripping means (6) to be undone by a linear actuating movement of the common tappet (3), and/or such that the plurality of gripping means (6) are able to apply a particular clamping force to the particular beverage can (20) by a linear actuating movement of the common tappet (3) in order to hold the particular beverage can (20) in the region of the particular top seam (5).

4. The gripper head (10) according to claim 2 or claim 3, in which
- the at least one tappet (3) or the common tappet (3) forms a thread (22), which engages with a corresponding mating thread (24) of the gripper (1) such that the at least one tappet (3) or the common tappet (3) is able to perform a particular linear actuating movement by a rotary movement extending preferably about its longitudinal axis, and/or in which
- the at least one tappet (3) or the common tappet (3) is pneumatically controllable to perform a particular linear actuating movement.

5. The gripper head (10) according to one of the claims 1 to 4, wherein the at least two grippers (1) comprise at least one return spring (55), which at least one return spring (55)
- is able to apply spring force to the tappet (3) or to the common tappet (3) in order to return it into a starting position after the performed linear actuating movement, and/or which at least one return spring (55)
- is able to press the at least one gripping means (6) against the particular beverage can (20) in the region of the top seam (5) by force application.

6. The gripper head (10) according to one of the claims 1 to 5, in which the at least one gripping means (6) used to grip a particular beverage can (20) from underneath in a form-fitting manner in the region of a top seam (5) comprises at least one insert (9) designed as a hook (8), which insert (9) designed as a hook (8) is designed as a replaceable part of the at least one gripping means (6).

7. The gripper head (10) according to one of the claims 1 to 6, in which the at least two grippers (1) comprise at least one torsion bar spring (17), with which at least one torsion bar spring (17) the at least one gripping means (6) is in contact, wherein the at least one gripping means (6) is held in its position by means of the at least one torsion bar spring (17) while gripping a particular beverage can (20) from underneath in a form-fitting manner, and wherein the form-fitting grip from underneath by the at least one gripping means (6) is undoable by spring-elastic movement of the at least one gripping means (6) against the spring force of the at least one torsion bar spring (17).

8. The gripper head (10) according to one of the claims 1 to 7, in which the at least two grippers (1) comprise a ball joint (15), via which ball joint (15) the at least one gripping means (6) and/or the at least one centring device (30) and/or the at least one tappet (3) or the common tappet (3), as applicable, are swivel-mounted.

9. The gripper head (10) according to claim 8, wherein the at least two grippers (1) comprise at least one spring (40), which is preferably formed by a plurality of leaf springs (42), and via which at least one spring (40) a restoring force for the at least one gripping means (6) and/or for the at least one centring device (30) and/or for the at least one tappet (3) or for the common tappet (3), as applicable, is provided in a swivel movement of the ball joint (15).

10. The gripper head (10) according to one of the claims 1 to 9, wherein a particular gripper (1) of the at least two grippers (2) forms a particular mounting plate (12), wherein the mounting plates (12) of the at least two grippers (1) abut flush against each other.

11. A method (100) for receiving at least one beverage can (20) via at least one gripper (1) of a gripper head (10) according to one of the claims 1 to 10, in which method,
- in order to receive the at least one beverage can (20), at least one gripping means (6), which is designed as a part of the at least one gripper (1), grips the particular beverage can (20) from underneath in a form-fitting manner in the region of a particular top seam (5), which particular top seam (5) is formed by the particular beverage can (20), the method being **characterised in that** the at least one beverage can (20) is brought into a defined alignment via at least one centring device (30), which is designed as a part of the at least one gripper (1), in which defined alignment the at least one gripping means (6) of the at least one gripper (1) is able to grip a particular beverage can (20) from underneath in a form-fitting manner in the region of the particular top seam (5).

12. The method according to claim 11, in which the at least one gripper (1) has at least one tappet (3), wherein the at least one tappet (3) performs a linear actuating movement, with the result that the form-fitting grip from underneath by the at least one gripping means (6) is undone, and/or with the result that a clamping force applied up to then onto the particular beverage can (20) by the at least one gripping means (6) in order to hold the particular beverage can (20) is undone.

13. The method according to claim 11 or claim 12, in which a gripper (1) or a plurality of grippers (1) each have a plurality of gripping means (6), with a common tappet (3) being assigned to the plurality of gripping means (6) of the particular gripper (1), wherein the common tappet (3) performs a linear actuating movement, with the result that the form-fitting grips from underneath by the plurality of gripping means (6) are undone simultaneously or at least approximately simultaneously, and/or with the result that the clamping forces applied up to then onto the particular beverage can (20) by the plurality of gripping means (6) in order to hold the particular beverage can (20) are undone simultaneously or at least approximately simultaneously.

14. The method of claim 12 or claim 13, in which
- the at least one tappet (3) or the common tappet (3) forms a thread (22), which engages with a corresponding mating thread (24) of the particular gripper (1), and wherein the at least one tappet (3) or the common tappet (3) is preferably rotated about its longitudinal axis and hereby performs a particular linear actuating movement, and/or in which method
- the at least one tappet (3) is pneumatically controlled to perform the linear actuating movement.

15. The method of one of the claims 11 to 14, in which the at least one gripper (1) has at least one torsion bar spring (17), with which at least one torsion bar spring (17) the at least one gripping means (6) is in contact, wherein the at least one gripping means (6) snaps under the top seam (5) of a particular beverage can (20) when receiving a particular beverage can (20), and wherein the form-fitting grip from underneath by the at least one gripping means (6) is subsequently undone by a spring-elastic movement of the at least one gripping means (6) against a spring force of the at least one torsion bar spring (17).

16. The method of one of the claims 11 to 15, in which the at least one gripper (1) has a ball joint (15), by means of which ball joint (15) the particular at least one gripping means (6) and/or the particular at least one centring device (30) and/or the particular at least one tappet (3) or the particular common tappet (3), as applicable, swivels, as required, if an actual position of a particular beverage can (20) deviates from an expected target position of a particular beverage can (20) when being received by the particular at least one gripper (1).

17. The method according to claim 16, in which the at least one gripper (1) comprises at least one spring (40), which at least one spring (40) is preferably formed by a plurality of leaf springs (42), and which at least one spring (40) swivels back the particular at least one gripping means (6) and/or the particular at least one centring device (30) and/or the particular at least one tappet (3) or, as applicable, the common tappet (3), with spring force into a starting position in a swivel movement performed after the particular at least one beverage can (20) has been received.

## Revendications

1. Tête de préhension (10) pour plusieurs canettes de boisson (20), lesquelles plusieurs canettes de boisson sont disposées les unes contre les autres, comprenant
- au moins deux préhenseurs (1) pour des canettes de boisson, dans laquelle un préhenseur (1) respectif est conçu pour saisir une canette de boisson (20) respective de la pluralité de canettes de boisson (20), et dans laquelle lesdits au moins deux préhenseurs (1)
- comprennent au moins un moyen de préhension (6) pour se prendre à engagement positif sous une canette de boisson (20) respective au niveau d'une rainure supérieure (5), laquelle rainure supérieure (5) est formée par une canette de boisson (20) respective, et
- comprennent au moins un centrage (30), c'est par l'intermédiaire duquel au moins un centrage (30) que la canette de boisson (20) respective peut être amenée dans une orientation définie, dans laquelle orientation définie ledit au moins un moyen de préhension (6) peut se prendre à engagement positif sous une canette de boisson (20) respective au niveau de sa rainure supérieure (5), dans laquelle
- ledit au moins un centrage (30) du préhenseur (1) respectif est positionné de telle sorte que ledit au moins un centrage (30) entrent en contact superficiel avec une surface latérale extérieure de la canette de boisson (20) respective dans au moins une zone définie, lors d'une réception d'une canette de boisson (20) respective, **caractérisée par le fait que**
ladite au moins une zone définie est positionnée de manière décalée le long du tracé circonférentiel de la canette de boisson (20) respective par rapport à au moins une zone de contact dans laquelle la canette de boisson (20) repose contre au moins une autre canette de boisson (20).

2. Tête de préhension (10) selon la revendication 1, dans laquelle lesdits au moins deux préhenseurs (1) comprennent au moins un poussoir (3), lequel au moins un poussoir (3) agit de concert avec ledit au moins un moyen de préhension (6) de telle sorte qu'une prise par-dessous à engagement positif respectif dudit au moins un moyen de préhension (6) au niveau de la rainure supérieure (5) peut être annulée au moyen d'un mouvement d'actionnement linéaire dudit au moins un poussoir (3) et/ou lequel au moins un poussoir (3) agit de concert avec ledit au moins un moyen de préhension (6) de telle sorte que ledit au moins un moyen de préhension (6) peut appliquer, au moyen d'un mouvement d'actionnement linéaire dudit au moins un poussoir (3), une force de serrage à la canette de boisson (20) respective pour maintenir une canette de boisson (20) respective au niveau de la rainure supérieure (5) respective.

3. Tête de préhension (10) selon la revendication 1 ou la revendication 2, dans laquelle lesdits au moins deux préhenseurs (1) comprennent une pluralité de moyens de préhension (6), à laquelle pluralité de moyens de préhension est associé un poussoir (3) commun, dans laquelle ledit poussoir (3) commun agit de concert avec la pluralité de moyens de préhension (6) de telle sorte qu'une prise par-dessous à engagement positif respective de la pluralité de moyens de préhension (6) au niveau de la rainure supérieure (5) peut être annulée au moyen d'un mouvement d'actionnement linéaire du poussoir (3) commun et/ou que la pluralité de moyens de préhension (6) peut appliquer, au moyen d'un mouvement d'actionnement linéaire du poussoir commun (3), une force de serrage respective à la canette de boisson (20) respective pour maintenir la canette de boisson (20) respective au niveau de la rainure supérieure (5) respective.

4. Tête de préhension (10) selon la revendication 2 ou la revendication 3, dans laquelle
- ledit au moins un poussoir (3) ou le poussoir commun (3) forme un filetage (22) qui est en communication avec un contre-filetage correspondant (24) du préhenseur (1) de sorte que ledit au moins un poussoir (3) ou le poussoir commun (3) peut effectuer un mouvement d'actionnement linéaire respectif par un mouvement de rotation s'étendant de préférence autour de son axe longitudinal, et/ou dans laquelle
- ledit au moins un poussoir (3) ou le poussoir commun (3) peut être commandé pneumatiquement pour effectuer un mouvement d'actionnement linéaire respectif.

5. Tête de préhension (10) selon l'une quelconque des revendications 1 à 4, dans laquelle lesdits au moins deux préhenseurs (1) comprennent au moins un ressort de rappel (55), lequel au moins un ressort de rappel (55)
- peut appliquer une force de ressort au poussoir (3) ou au poussoir commun (3) après que le mouvement d'actionnement linéaire a été effectué, afin de le ramener à une position initiale, et/ou lequel au moins un ressort de rappel (55)
- peut plaquer ledit au moins un moyen de préhension (6), en le sollicitant par force, contre la canette de boisson (20) respective au niveau de la rainure supérieure (5).

6. Tête de préhension (10) selon l'une quelconque des revendications 1 à 5, dans laquelle ledit au moins un moyen de préhension (6) destiné à se prendre à engagement positif sous la canette de boisson (20) au niveau de la rainure supérieure (5) comprend au moins une pièce d'insertion (9) conçue en tant que crochet (8), laquelle pièce d'insertion (9) conçue en tant que crochet (8) est réalisée en tant que composant échangeable dudit au moins un moyen de préhension (6).

7. Tête de préhension (10) selon l'une quelconque des revendications 1 à 6, dans laquelle lesdits au moins deux préhenseurs (1) comprennent au moins un ressort à barre de torsion (17), c'est avec lequel au moins un ressort à barre de torsion (17) que ledit au moins un moyen de préhension (6) est en communication, dans laquelle ledit au moins un moyen de préhension (6) est maintenu dans sa position par ledit au moins un ressort à barre de torsion (17) lorsqu'une canette de boisson (20) respective est saisie par-dessous à engagement positif, et dans laquelle la prise par-dessous à engagement positif dudit au moins un moyen de préhension (6) peut être annulée par un mouvement élastique dudit au moins un moyen de préhension (6) contre la force de ressort dudit au moins un ressort à barre de torsion (17).

8. Tête de préhension (10) selon l'une quelconque des revendications 1 à 7, dans laquelle lesdits au moins deux préhenseurs (1) comprennent une rotule (15), c'est par l'intermédiaire de laquelle rotule (15) que ledit au moins un moyen de préhension (6) et/ou ledit au moins un centrage (30) et/ou ledit au moins un poussoir (3) ou bien le poussoir commun (3) sont montés de manière à pouvoir pivoter.

9. Tête de préhension (10) selon la revendication 8, dans laquelle lesdits au moins deux préhenseurs (1) comprennent au moins un ressort (40) qui est réalisé de préférence par une pluralité de ressorts à lames (42) et par l'intermédiaire duquel au moins un ressort (40) est fournie une force de rappel pour ledit au moins un moyen de préhension (6) et/ou pour ledit au moins un centrage (30) et/ou pour ledit au moins un poussoir (3) ou bien ledit poussoir commun (3) lors d'un mouvement de pivotement de la rotule (15).

10. Tête de préhension (10) selon l'une quelconque des revendications 1 à 9, dans laquelle un préhenseur (1) respectif desdits au moins deux préhenseurs (1) forme une plaque de fixation (12) respective, dans laquelle lesdites plaques de fixation (12) desdits au moins deux préhenseurs (1) sont à fleur l'une contre l'autre.

11. Procédé (100) de réception d'au moins une canette de boisson (20) par l'intermédiaire d'au moins un préhenseur (1) d'une tête de préhension (10) selon l'une quelconque des revendications 1 à 10, dans lequel procédé
- au moins un moyen de préhension (6) formé en tant que composant dudit au moins un préhenseur (1) se prend à engagement positif sous ladite au moins une canette de boisson (20) pour la recevoir au niveau d'une rainure supérieure (5) respective, laquelle rainure supérieure (5) respective est formée par la canette de boisson (20) respective, le procédé étant **caractérisé par le fait que**
ladite au moins une canette de boisson (20) est amenée dans une orientation définie par l'intermédiaire d'au moins un centrage (30) formé en tant que composant dudit au moins un préhenseur (1), c'est dans laquelle orientation définie que ledit au moins un moyen de préhension (6) dudit au moins un préhenseur (1) peut se prendre à engagement positif sous une canette de boisson (20) respective au niveau de la rainure supérieure (5) respective.

12. Procédé selon la revendication 11, dans lequel ledit au moins un préhenseur (1) comprend au moins un poussoir (3), dans lequel ledit au moins un poussoir (3) effectue un mouvement d'actionnement linéaire, d'où résulte que la prise par-dessous à engagement positif dudit au moins un moyen de préhension (6) est annulée et/ou d'où résulte qu'une force de serrage appliquée jusqu'alors à la canette de boisson (20) respective pour maintenir la canette de boisson (20) respective par le biais dudit au moins un moyen de préhension (6) est supprimée.

13. Procédé selon la revendication 11 ou la revendication 12, dans lequel un préhenseur (1) ou plusieurs préhenseurs (1) comprend/comprennent chacun plusieurs moyens de préhension (6), auxquels plusieurs moyens de préhension (6) est associé un poussoir (3) commun du préhenseur (1) respectif, dans lequel ledit poussoir (3) commun effectue un mouvement d'actionnement linéaire, d'où résulte que les prises par-dessous à engagement positif de la pluralité de moyens de préhension (6) sont annulées simultanément ou au moins approximativement simultanément et/ou d'où résulte que des forces de serrage appliquées jusqu'alors à la canette de boisson (20) respective pour maintenir la canette de boisson (20) respective par le biais de la pluralité de moyens de préhension (6) sont supprimées simultanément ou au moins approximativement simultanément.

14. Procédé selon la revendication 12 ou la revendication 13, dans lequel
- ledit au moins un poussoir (3) ou le poussoir commun (3) forme un filetage (22) qui est relié à un contre-filetage correspondant (24) du préhenseur (1) respectif, et dans lequel ledit au moins un poussoir (3) ou le poussoir commun (3) est de préférence tourné autour de son axe longitudinal et effectue ainsi un mouvement d'actionnement linéaire respectif, et/ou dans lequel procédé
- ledit au moins un poussoir (3) est commandé pneumatiquement pour effectuer le mouvement d'actionnement linéaire.

15. Procédé selon l'une quelconque des revendications 11 à 14, dans lequel ledit au moins un préhenseur (1) comprend au moins un ressort à barre de torsion (17), c'est avec lequel au moins un ressort à barre de torsion que ledit au moins un moyen de préhension (6) est en communication, dans lequel ledit au moins un moyen de préhension (6) s'enclenche sous la rainure supérieure (5) d'une canette de boisson (20) respective lors d'une réception d'une canette de boisson (20) respective, et dans lequel, par conséquent, la prise par-dessous à engagement positif dudit au moins un moyen de préhension (6) est annulée par un mouvement élastique dudit au moins un moyen de préhension (6) contre une force de ressort dudit au moins un ressort à barre de torsion (17).

16. Procédé selon l'une quelconque des revendications 11 à 15, dans lequel ledit au moins un préhenseur (1) présente une rotule (15), c'est au moyen de laquelle rotule (15) que ledit au moins un moyen de préhension respectif et/ou ledit au moins un centrage (30) respectif et/ou ledit au moins un poussoir (3) respectif ou bien le poussoir commun (3) respectif pivote(nt) selon les besoins, à condition qu'une position réelle d'une canette de boisson (20) respective s'écarte d'une position cible attendue d'une canette de boisson (20) respective lors d'une réception par le biais dudit au moins un préhenseur (1) respectif.

17. Procédé selon la revendication 16, dans lequel ledit au moins un préhenseur (1) comprend au moins un ressort (40), lequel au moins un ressort (40) est réalisé de préférence par plusieurs ressorts à lames (42), et lequel au moins un ressort (40) fait repivoter, avec la force de ressort, ledit au moins un moyen de préhension (6) respectif et/ou ledit au moins un centrage (30) respectif et/ou ledit au moins un poussoir (3) respectif ou bien le poussoir commun (3) respectif dans une position initiale, lors d'un mouvement effectué de pivotement, après avoir reçu ladite au moins une cannette de boisson (20) respective.
